# EUROPEAN PATENT APPLICATION

(11) **EP 1 804 455 A1**
(43) Date of publication of application: **04.07.2007**
(21) Application number: 05425918.9
(22) Date of filing: 27.12.2005
(51) Int. Cl.: H04L 29/06

(54) **Method and system to exchange videos in real-time taken by one's cellular handset during two-party voice calls**

(71) Applicant: Siemens S.p.A., 20126 Milano (IT)
(72) Inventor: Blaiotta, Donatella, 27100 Pavia (IT); De Zen, Giovanna, 31011 asolo (TV) (IT)

(57) **Abstract**

Push to Watch (PTW) is a new Combinational Service allowing mobile users to communicate in a rich and multimedia style fashion. PTW enriches a CS voice call enabling the users to exchange alternately either live video contents taken by the video camera embedded in the user terminals or pre-stored in the device while they are talking. When PTW is used for sharing live video, only the video content is encoded while the reference audio is considered as the voice. The user can send his own encoded video in real-time by pushing a button on his handset or handling a joystick. The service has been designed to preserve the privacy of the two peers: the video content is exchanged only when is needed and only if either user likes to. PTW implements a server-based approach which is the best choice to foster for the MNOs. The PTW server includes a Control Server to manage SIP sessions, and a Floor Control Server based on the RTC APP packets. The SIP INVITE message and the relevant SIP 200 OK Reply include an SDP attribute a=floor-control:server for prompting both the inviter and the invitee that a Floor request shall be addressed either to said Floor Control Server or to a Media Server. The Floor Control Server takes care of handling who is granted the right to send the real-time video flow to the other party; setting the duration of the exchanged video; reporting on the RTP flow duration for possible time-based charging. Both Control Server and user handsets include TCP and UDP ports for exchanging SIP signalling. Both Floor Control Server and user handsets include UDP ports for exchanging RTC APP packets. The peer user handsets include two sequentially numbered UDP ports for transmitting/receiving RTP real-time video packets and the RTCP SR/RR flow control signalling, respectively.

## Description

### FIELD OF THE INVENTION

The present invention relates to the field of mobile radio networks beyond the second generation, and more precisely to a method and system to exchange videos in real-time taken by one's cellular handset during two-party voice calls.
(Used Acronyms and bibliographic References are given at the end of the description).

### BACKGROUND ART

Nowadays a large integration between IP and PLMN networks is under way to the benefit of wireless customers who may enjoy a lot of attractions offered by IP over traditional telecommunications protocols and in meanwhile experiencing "seamless" communications over the different types of networks which their calls may pass. This facilitates a wide diversity of communications scenarios and combination of services such as the exchange of real-time multimedia streams during voice calls. A short introduction on IMS and SIP is due. The core of the IP-PLMN integration is a 3GPP platform named IMS which has been introduced appositely to offer to the operators, the service providers, and the clients the sort of service capabilities that IP is designed to provide. The primary focus of the IMS platform is that to provide the users/clients with the ability to join multimedia session in which they are allowed to send and receive voice and data communications even when roaming. The IMS will use the emerging IP version 6 (IPv6) together with SIP protocol for the establishment of sessions and the service provisioning on mobile networks. SIP is an application-layer control (signalling) protocol for creating, modifying and terminating sessions with two or more participants. These sessions include Internet multimedia conferences, Internet telephone calls, presence service and multimedia distribution, etc. SIP supports user mobility by proxying and redirecting requests to the user's current location. For more details see **[RFC3261]** at the end. For the same purpose **[TS_22.228]** identifies the necessary requirements from the user point of view. The reference architecture for IMS subsystem can be found in **[TS_23.002].** A more exhaustive description of the involved entities can be found in **[TS_23.228].** Concerning SIP these brief notices are useful: SIP is based on an HTTP-like request/response transaction model; each SIP transaction consists of a request that invokes a particular method, or function, on the server and at least one response. A header is a component of a SIP message that conveys information about the message, it is structured as a sequence of header fields. Header fields are named attributes that provide additional information about a message. The details of the session, such as the type of media, codec, or sampling rate, are not described using SIP. Rather, the body of a SIP message contains a description of the session, encoded in some other protocol format. One such format is the Session Description Protocol (SDP) **[RFC2327]**. The SDP body is carried by the SIP message in a way that is analogous to a document attachment being carried by an email message, or a web page being carried in an HTTP message: for HTTP see **[RFC2616]**.

The existing capability to use simultaneous services stated in **[TS_22.101]** can be used to create services that combine existing services so that they look as a single service for the end user. The variegated scenario of combinational services foresees Circuit Switched (CS) services and Packet Switched (PS) services diversely combined among them. Accordingly, the user handset shall be either 3^{rd} generation multi-RAB or 2.5^{th} generation dual mode. In the scope of combinational services 3GPP and OMA are two distinct working groups aimed to study and standardize services of the "Push" type by which of that a user at a time gets the permission to sends a real-time source stream to a group of other selected users in the session, simply pushing a button on the cellular handset (2,5G, 3G technology). The term "push" means any facility put at the disposition of the user on his handset to this aim, e.g.: a button, a selectable item of a list, an icon, a voice command, etc. Once the sending is completed the release of the button, or the like, alerts the network. Push services deal with media or multimedia streams of encoded multimedia data packets containing either audio and video or video only or audio only components. In the context of combinational services, push services can be understood as the solution for sharing multimedia contents in real-time between users involved in an audio call. OMA identifies a family of services via IP called Push To Talk over Cellular (PoC), that comprises both the capabilities for the SIP service session control (PoC Control Plane) and the capabilities for media flow control and media duplication(PoC User Plane). In particular the following functionality are managed at user plane level:
- Audio/Video packets duplication.
- Flow Control.
- Floor control could be implemented.

It should be noted that Push To Talk sessions characterised by the transmission of real-time audio are typically an alternative to a circuit switch communication, while combinational services are defined to allow the sharing of real-time media, typically video, between the users involved in a circuit switched audio call.

However PoC is evolving thanks to OMA phase II standardization in order to allow the sharing of real-time videos also between users involved in an circuit switched audio call [OMA-Ph2-Req].

A server based solution for the sharing of real-time video between two users involved in an audio call defined inside OMA PoC phase 2 will represent a response from the next standards to the proprietary peer-to-peer Real-time Video Sharing (RTVS) solution proposed by Nokia.

### OUTLINED TECHNICAL PROBLEMS

Given that combinational services are designed for allowing the sharing of multimedia contents between the users involved in an audio call and being the very most part of audio calls two-party calls (recent surveys report that person-to-person communication still represents more that 95% of communication scenarios), combinational services solutions should be optimised for two party scenarios.

Unfortunately, PoC has been designed to support 1:1 scenario as a special case of the 1:m scenario where m is equal to 1. Hence, PoC is optimised for multi-party scenarios which are not frequent for PoC session and even less frequent for combinational scenarios. This means that if a PoC like solution is used for supporting the sharing of real-time video between two peers involved in an audio call, a classical Media Server responsible for PoC User Plane related functions should be used. In particular, the Media Server should be in charge of processing of user plane packets including the useless duplication of RTP video packets belonging to video streams typically encoded at 57 kbps that are generated by users who have taken the floor for each served service session. Hence, the resources provided for duplication inside a Media Server shall be dimensioned for a predetermined maximum number of users; they include: memory space, CPU processing time, UDP and TCP ports, etc. From the above remarks, it results that it should be appropriate to identify a new solution (designed for 1:1 scenarios) to be used in place of the typical PoC architecture in order to have the benefits of a server based approach at Control Plane level including User Plane floor control and the benefits of a peer-to-peer approach at User Plane level.
Hence the technical problems to be solved are:
- To define an architecture which allows to decouple at User Plane level the server based approach of floor control (RTCP APP packets - see Note*) from the peer-to-peer approach of flow (RTP) and flow control (all RTCP packets excluding RTCP APP packets).
- To control client behaviour via an appropriate SDP parameter communicated by the Control Server during SIP session setup so that handsets can interwork with both classical Media Server and specialized Floor Control Server for two-party scenarios (e.g. two party combinational service).
*Note - The RTCP APP (RTCP APPlication-defined) Packet is defined in [RFC3550]. The RTCP APP packet is intended for experimental use as new applications and new features are developed, without requiring packet type value registration. The usage of RTCP APP packet is specified by OMA for the PoC service.

### OBJECTS OF THE INVENTION

A first object of the present invention is that to define an architecture which allows to decouple at User Plane level the server based approach of floor control from the peer-to-peer approach of flow and flow control.

A second object of the present invention is that to control client behaviour so that handsets can interwork with both classical Media Server and specialized server for two-party scenarios.

A third object of the present invention is that to define a new combinational service named Push To Watch (PTW) which allows to overcome the limitations of the Real-time Video Sharing solution defined by Nokia thanks to a server based approach which also overcomes some performance issues of PoC-like architectures in 1:1 scenarios.

A fourth object of the present invention is that to reduce the costs of PTW solution for the operator and consequently for the end user.

### SUMMARY OF THE INVENTION

The invention achieves said object providing a cellular telephone network connected to IMS and arranged to combine two-party voice calls with video streams (either live taken by the video camera embedded in the user terminals or pre-stored in the device) into a new combinational service called Push to Watch (PTW), as disclosed in claim 1.

The cellular telephone network according to the invention includes:
- means of both the user terminals and the core network cooperating to each other for establishing two-party voice calls trough circuit switched channels;
- SIP protocol service means, located in the core network, for establishing or tearing down sessions of said combinational service;
- a Floor Control Server located in the core network either for granting or denying a permission, called hereinafter floor, for the exclusive usage of a packet data channel by the requesters;
- push means of the user terminals for asking the floor during a voice call;
- first UDP ports at the user terminal side and the Floor Control Server side and relevant processing means for exchanging RTCP APP floor control signalling;
- second UDP ports at the user terminals and relevant processing means for transmitting/receiving RTP video streams and the relevant RTCP flow control signalling peer-to-peer on the granted packet data channel and in parallel to the voice call.

It is understood that TCP and UDP ports (sockets) are provided at both the user terminal and SIP protocol service means, and relevant processing means for exchanging SIP signalling messages.

The push means either include:
- Soft-keys, clicked a first time for requesting the floor and running the video as soon as the floor is granted, and a second time for releasing the floor and stopping the video.
- Joystick, pushed and maintained pressed to get the floor and running the video as soon as the floor is granted, and released for releasing the floor and stop the video, like a walkie-talkie.

The core network includes gateway means for transferring RTP packets of real-time videos and RTCP SR/RR flow control signalling between the peer user terminals directly; the same gateway means also provides to transfer RTCP APP floor control signalling to/from said Floor Control Server.

From the operational point of view, said SIP protocol service means handle operations related to the establishment, establishment rejected, and leave of PTW sessions, interacting with either the Floor Control Server or an already existing Media Server, using H.248 encoding format until the media gateway control protocol would be extended in order to enable the separation of floor control from remaining media processing functionality inside a unique Media Server.

Yet from the operational point of view, the Floor Control Server decides who of the two parties engaged in the voice call the Floor shall be granted to, namely the exclusive right to transmit its own live video to the other party without he is forced to send a video back. Said Server also have a moderation functionality allowing the operator to limit the duration of audio/video exchanges. For example, if the floor has been taken by one user longer than the maximum time, the Floor Control Server can force the floor release. Furthermore the generate some Reports on the RTP flow duration for possible time-based and volume-based charging.

In reality, the PTW service is half-duplex so that the privacy is assured. Peculiarity of the service is that the user is who decides when, during the call, is needed to transmit video contents, furthermore the video is transferred one way; that is, just one user sends his own real-time video and only when he is willing to. When PTW is used for sharing live video, only the video content is encoded while the reference audio is considered as the voice.

The cellular telephone network of the claim 1 is suitable to be operated in accordance with a method for combining two-party voice calls with video streams, taken by the video camera embedded in the user terminals, into a new combinational service called PTW, as disclosed in the independent method claims.

The method further object of the invention includes the steps of:
- establishing a two-party voice call between users through a circuit switched channel;
- introducing a specific parameter in said SIP INVITE message and the relevant Replay for indicating to both the inviter and the invitee that a request message (Floor Request) for a permission, called hereinafter floor, for the exclusive usage of a packet data channel shall be addressed to a dedicated Floor Control Server inside the network;
- sending said specialized SIP INVITE message from one inviter to the other party engaged in the voice call to the aim of establishing a session for providing a combinational service;
- either pushing on its own terminal by a requester (UA) in the service session for sending a floor request to the Floor Control Server or being the floor request sent automatically by the inviter;
- sending by the Floor Control Server either a floor grant or deny RTCP APP signalling message to the requester;
- transmitting by the granted requester RTP data and RTCP flow control signalling messages peer-to-peer in parallel to the voice call.
Furthermore:
- the invited user may either accept or refuse the invite;
- many real-time videos can be transmitted during the same session by one or the other users under floor control mechanism;
- the following floor control procedures are foreseen: Floor Request with floor idle; Floor Request with floor already granted; and Floor Release.
In particular, a new SDP "a=" field (i.e. it is proposed to be an session attribute) named "floor-control" is introduced to indicate that floor control has to be used and how it has to be managed, that is either peer-to-peer or with a server:
- floor-control: peer-to-peer;
- floor-control:server.
The "floor-control:server'' parameter should convey information (namely: the IP address of the Floor Control Server and the number of the UDP port relevant to the RTCP APP floor control signalling) required by both the clients to interact with the Floor Control Server:
- a=floor-control:server (in SDP of SIP INVITE from inviter to PTW server);
- a =floor-control:server IP4 server-IP-address port (in SDP of SIP INVITE from PTW server to invited and in SIP 200 OK from PTW server to inviter).
When "floor-control" attribute is used the following attributes are not meaningful anymore and hence they should not be present in the SDP:
- a=sendonly (this attribute means that an user is the only one allowed to send data);
- a=recvonly (this attribute means that an user will only receive the data).

### ADVANTAGES OF THE INVENTION

With respect to the PoC scenario where a Media Sserver as defined by OMA is needed for duplication of real-time contents, the advantages of the PTW service with the characteristics of the present invention are:
- No need for RTP packet duplication with two parties session.
- Lower cost compared to a full functional Media Server.
- Optimization for two party scenarios.

With respect to a peer-to-peer real-time video sharing solution for combinational services, the advantages of the PTW service with the characteristics of the present invention are:
- Both users can share their video in real-time inside the same service session under floor control rules.
- Floor exchange is very quick compared to the time required to set up a new service session.
- Control Server can apply both operator defined and user defined policies (i.e. access lists).
- Operator can act as a moderator.

PTW can also be compared to CS Video Call and to Voice To Videocall combinational service.
Video Call is a CS full-duplex communication where the two involved parties are exchanging audio and video content over the whole duration of the call and have no direct control on the video content. When the Video Call is started, the video content is handled like the voice and the peer user is forced to send a video back; both the users can see each other and the privacy is not preserved. Besides, there is no filter of any kind on the video contents, unless the user rejects the video call from the beginning. This characteristic has been indicated as one of the main reason for a low penetration of the Video Call in the mass market. Furthermore, the Video Call service is costly because of its occupancy of the two-way wideband channel for all the duration of the call.
Voice to Videocall (V2V) enables two users to upgrade a CS audio call with full-duplex live video transferred in real-time when the occasion arises. The Voice is on the CS network and the video content is transferred via the PS network using RTP/RTCP once a V2V service session has been successfully setup between the peers of the CS call. V2V has been designed for a full-duplex scenario in which both the users are willing to see each other since the service session is established. As a matter of fact, V2V is a service that recalls the features of a CS Videocall using the concept of Combinational Services.
With respect to both full-duplex Video Call and Voice to Videocall where both parties can see each other, the new PTW service:
- It preserves the privacy of the two users: neither of them exchanges video unless one of them is willing to.
- The pushing part can perform a discretional filtering action on the contents to be transferred.
- The costs of the session are noticeably smaller both for the mobile operator and the end user. The rationale underlies the different nature of the two services: while for a video call is needed a continuous bi-directional video flow during the call, for PTW the flow is one-way over the PS network and not at all continuous.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1** shows the general architecture for hosting the point PTW service according to the present invention;
- **figures 2** and **3** show the reference architecture with two different approaches of the PTW service the second one being the only one pursued by the invention;
- **figures 4** and **5** show two alternative embodiments of the reference architecture of fig.3, the first one being the preferred embodiment of the present invention;
- **fig.6** shows the Client software architecture of the user terminal;
- **figures 7a , 7b,** and **7c** show exemplary screenshots of PTW Client user interface (i.e. MMI) on a Motorola Symbian UIQ A1000 laboratory prototype handset;
- **figures 7p** and **7q** show exemplary screenshots of PTW MMI on a Nokia Series 60 laboratory prototype handset;
- **fig.8** shows the overall signalling message sequence chart during a PTW session, according to the invention;
- **figures 9** to **11** show the message sequence charts of SIP signalling performed through the PTW Control Service functionality of fig.4;
- **figures 12** to **15** show the message sequence charts of floor control procedures performed through the RTCP based Floor Control Server of fig.4.

### DETAILED DESCRIPTION OF AN EMBODIMENT OF THE INVENTION

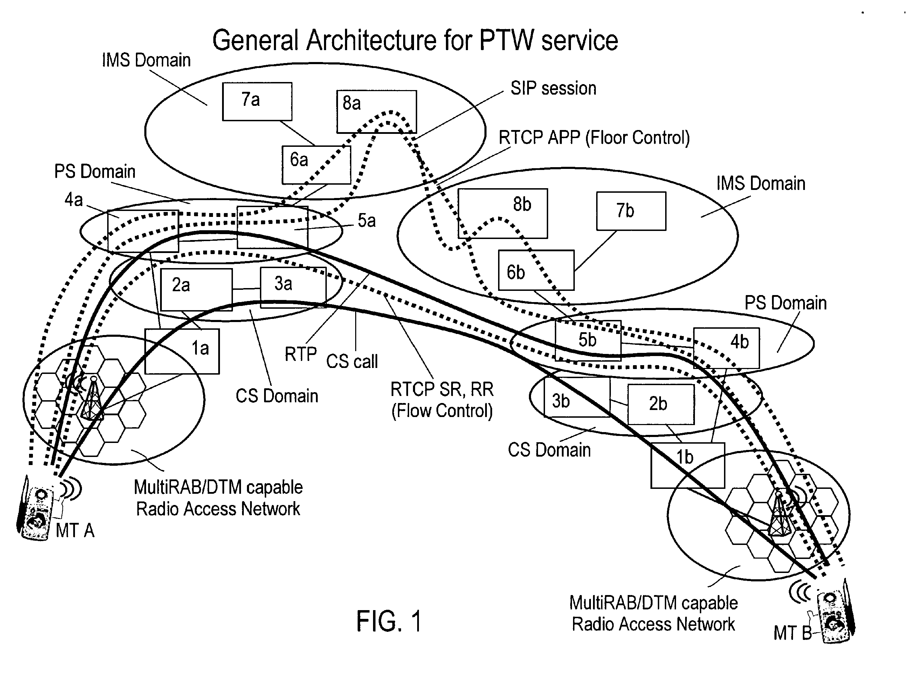

**Fig.1** shows a simplified communication scenario including two mobile radio systems (either UMTS or GSM-GPRS), two respective Mobile Terminals MT A and MT B (either multiRAB or DTM), and two IMS domains the MT A and MT B belong to. Without limitations, the architecture depicted in **fig.1** can be largely derivable from 3GPP Technical Specifications (TS), also considering the consolidated IETF RFCs. Each mobile radio system is subdivided in a Core Network (CN) connected to a Radio Access Network (RAN), either multiRAB or DTM capable. The Core Network includes the CS domain, the PS domain based on GPRS, and the IMS connected to the PS domain. The Radio Access Network includes a plurality of serving cells each of them corresponding to the coverage area generated by a respective Base Station (BS). All the BSs of a RAN are connected to a common Controller BSC/RNC (1a, 1b) able to handle both CS calls and Packet Data transmissions in parallel. Inside the Core Network the CS domain includes an MSC (2a, 2b) and a gateway element GMSC (3a, 3b); the MSC is connected both to the Controller and the GMSC. The two GMSCs are interconnected (not shown). The PS domain includes a SGSN node (4a, 4b) and a gateway node GGSN (5a, 5b); the SGSN is connected both to the Controller and the GGSN node. The two GGSNs are interconnected (not shown). Each IMS domain includes the following elements: CSCF (6a, 6b), HSS (7a, 7b), and a PTW Server (8a, 8b). The CSCF block is connected to both the HSS ad to the GGSN node. Impressed on the figure five curved lines are departing from either mobile terminal MT A or MT B and arriving to the other MT B or MT A. Two solid lines indicate paths of the CS call and RTP data, which together characterise a combinational service. The three dotted curves indicate signalling paths. The solid line of the CS call which departs from either one of the two terminals MT A, MT B crosses in the order: BS of the caller, Controller, MSC, GMSC of the first network, and GMSC, MSC, Controller, and the BS of the second network. The solid line of the RTP data which departs from either one of the two terminals MT A, MT B crosses in the order: the Base Station of the data sender, Controller, SGSN, GGSN of the first network, and GGSN, SGSN, Controller, and the Base Station of the second network. The dotted line path of the Flow Control RTCP SR, RR signalling is the same as the RTP solid line. The dotted line path of SIP signalling activated to setup or tear down PTW sessions which departs from either one of the two terminals MT A, MT B crosses in the order: the Base Station of the inviter, Controller, SGSN, GGSN, CSCF, and the PTW server inside the first network, and the same blocks in reverse order inside the second network. The dotted line path of the RTCP APP signalling for the Floor Control is the same as the SIP signalling path, but with a different treatment into the PTW Server.

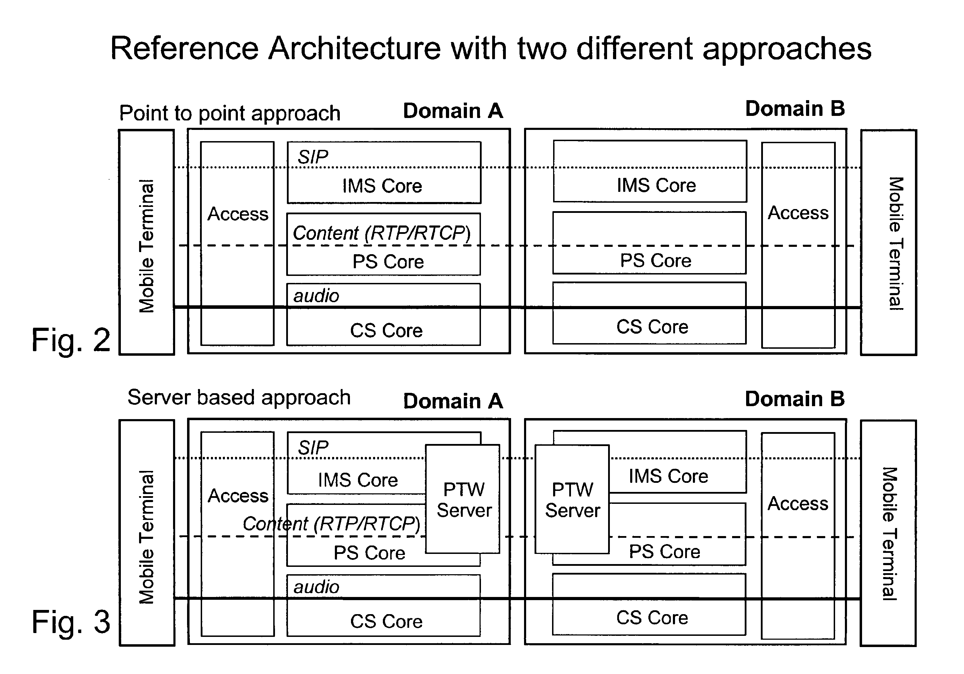

**Figures 2** and **3** show the reference architecture for PTW service with two different approaches: Peer to Peer of **fig.2** and server-based PTW of **fig.3.** The second approach is the best choice to foster for the MNO. It enforces the service policies, introduces new service model and improves the service flexibility and usability.

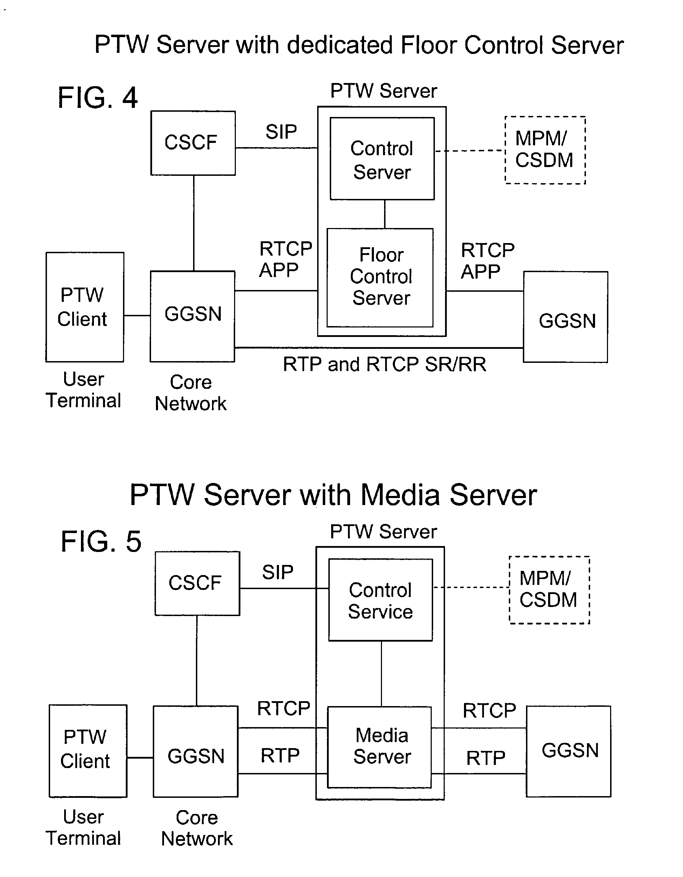

With reference to **fig.3**, the PTW Server has been designed with two options: Floor Control Server of **fig.4** and Media Server of fig.5. Both the solutions use the following protocols: SIP for the session management; RTCP for Floor Control; RTP for real-time data transfer. The first option, namely PTW server with Floor Control Server (**fig.4**) represents the embodiment of the present invention; the other option is generally derivable from PoC and is given for comparison only. The PTW Server of **fig.4** offers a noticeable simplification in respect of the Media Server (fig.5) because it is specifically designed for PTW. With a specialized Floor Control Server, the costs of deployment decrease and the roll out of the service on the market is sped up. Such a choice has been motivated by the fact that, with the specific combinational service dealing with video streams, the floor policies are supposed to be different from the ones used by the known full media server solutions, such as the PoC for the voice.

The reference architecture of **fig.4** is subdivided into the following cascaded functional blocks: User Terminal, Core network, and PTW Server. The User Terminal includes a PTW Client application. The Core Network includes two GGSNs and CSCF blocks. The PTW Server includes a Control Server and a RTCP APP based Floor Control Server connected to each other. Optional MPM and CSDM blocks are connected to the Control Server. A first GGSN is connected to the, CSCF, to the Floor Control Server, and to a second GGSN directly. The CSCF is connected to the Control Server. The second GGSN is connected to the Floor Control Server and to the first GGSN. The connection between CSCF and Control Server is dedicated to SIP signalling. The connection between the first GGSN and Floor Control Server, so as to the latter and the second GGSN, are dedicated to RTCP APP signalling. The connection between the first GGSN to the second one is dedicated to the RTP streams and RTCP SR/RR signalling.

In operation, the Control Server: handles the general logic of the service and PTW SIP session. Its main functionalities are: Session management: establishment, rejection, and termination; interaction with the RTCP APP based Floor Control Server; Access List management (optional); DnD management (optional). The RTCP APP based Floor Control Server has the following functionalities: handling who is granted the right to send the real-time video flow to the other party; moderation functionality (setting of the duration of the video exchanged); reports on the RTP flow duration for possible time-based charging.

The reference architecture of **fig.5** differs from the one of **fig.4** mainly because the PTW Server includes a Media Server instead of the RTCP APP based Floor Control Server. Now the two GGSNs are no more connected to each other directly, but only by the interposed Media Server. In operation, the Control Service behaves as said for Control Server of fig.4, while the Media Server manages the RTP/RTCP flow by implementing the following functionalities: Streaming Media Management; Floor Control Management; RTP Packet replication for multiparty scenarios; Trans-coding Functionality (optional).

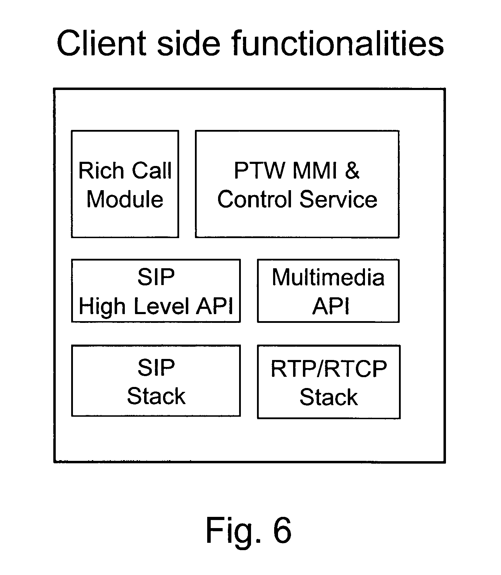

**Fig.6** shows the functionalities at the Client side in the User Terminal. These functionalities constitute a Client software architecture including: SIP Stack; SIP High Level API; RTP/RTCP Stack for real-time data transfer; Multimedia (Video) API; Rich Call Module, and PTW MMI & Control Service. In operation:
- Rich Call Module is responsible for: Management of capability exchange procedure with the peer involved in an audio call; Activation of combinational services via the RichCall MMI which shows only the subset of application which are supported by both users; Coordination between an activated combinational service and CS call.
- PTW MMI & Control Service Client handles the SIP session management.
- MMI elements provide user interface to access to run application layer functionalities as follows: Terminal Screen with the relevant application service menu; Floor managed using either: Softkeys which enable to get and release the floor or Joystick which is used to get the floor and push video until it is pressed like a walkie-talkie.
- The MMI application layer provides the following functionalities: Rendering all the related PTW menus on the screen; Management and presentation of the contacts stored on the handset phonebook; Initiating a one-to-one CS voice call; initiation and notification of PTW video session during the CS call; Receiving PTW session; Accepting/rejecting PTW session.
- The SIP Stack module manages the connection to the TCP and UDP ports for the SIP signalling.
- The RTP/RTCP Stack module manages the connection to first UDP ports for RTP data and RTCP SR/RR signalling, and second UDP ports for RTCP APP Floor Control signalling.

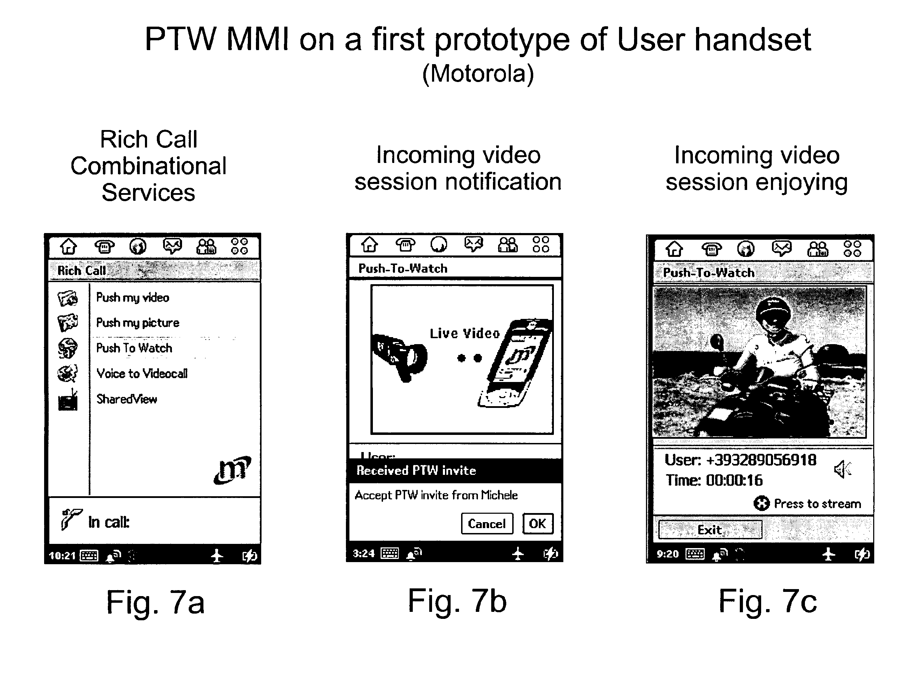

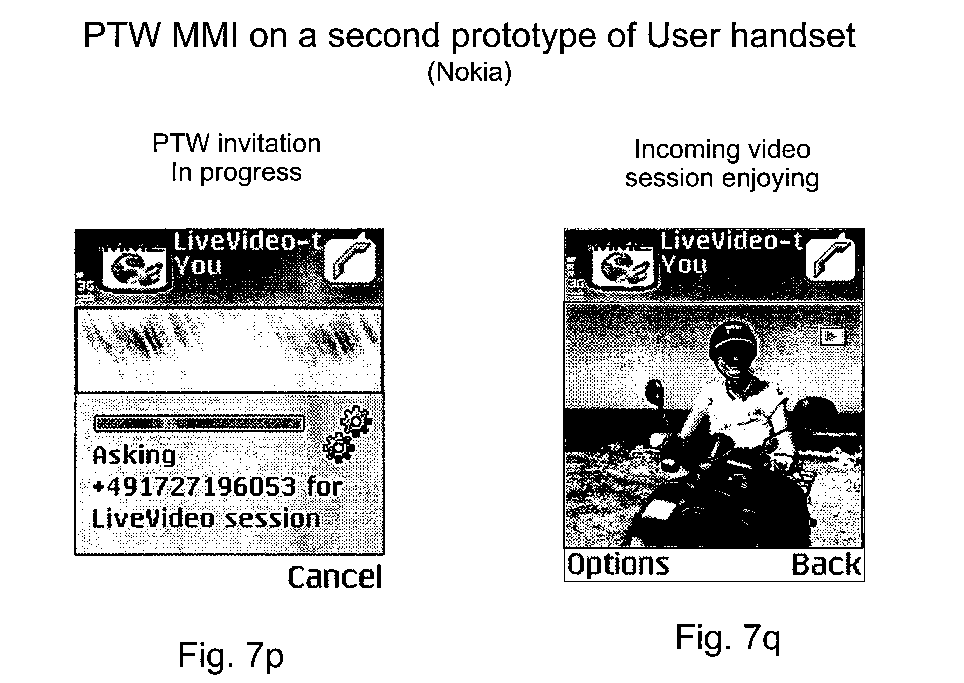

**Figures 7a, 7b,** and **7c** show exemplary screenshots of PTW MMI on a Motorola A1000 prototype user handset. **Figures 7p** and **7q** show exemplary screenshots of PTW MMI on a Nokia Series 60 prototype user handset.

Before the detailed description of the PTW service procedure and signalling, the main system requirements and use cases are introduced hereafter. PTW is targeted for all the situation in which one of the user involved in CS call likes to push live video in real-time to the peer without forcing him to do the same. In addition video sharing can be activated only if the PTW session is explicitly accepted by the invitee unless automatic acceptance is configured. The service key features are:
1. The users need to exchange live video content during the voice call.
2. The video content is transferred live to the peer that can accept or reject the session.
3. The video content is transferred half-duplex.

PTW has been architecturally designed taking into account the following requirements:
- Preferring a server based solution that enforces the role of the MNO in the management of the service.
- Optimization for a two-party scenario.
- Open interfaces to allow interactions with IMS service enablers and possible interactions with PoC2 architecture elements.
- CS call procedure shall not be affected by the PTW live video session.
- QoS of the CS call shall not be impacted by the PTW live session.

These high level requirements are motivated by the following considerations and analysis:
- MNOs like applications that enforce their role in Real-time Video Sharing (RTVS) business model and allow them to apply their policies. Current version of RTVS based on a peer-to-peer model doesn't fulfil such a requirement.
- PTW has been mainly targeted for two-party scenario because it is born as combinational service and a CS call is usually established between two users.

System Requirements:
- GERAN DTM-enabled or UTRAN MultiRAB-enabled access network;
- All firewalls along the data path should allow the peer-to-peer transfer.

Media Encoding. A PTW application supports the following video parameters:
- Video codec: H263 profile 0 level 10; MPEG 4.
- Bit rate: until 64 kbps.
- Frame rate: 5 / 10 / 20 fps.

Reference Devices: The PTW client has been optimized on three reference devices, chosen for their high standards and multimedia capabilities, Nokia 6630, Nokia 6680, Nokia 70, their evolutions including EDGE/DTM enabled handsets and Motorola A925, A1000 and their evolutions. All such smart phones have Symbian operating systems, and support H.263 and MPEG-4 encoding formats.

PTW Use Cases - General Description. In the following are indicated the main cases of use of the application:
- Two users set up a CS audio call. On the mobile phone a menu with the available combinational services is displayed.
- PTW service can be initiated by any of the two users involved in the call selecting the service on the menu.
- The invited user is requested to accept or reject the session when he received the (SIP) invitation for a PTW session.
- Once the session is established the user can request the floor to send his own live video by means of a push facility. Term "Push" is intended for the only sending of real-time media streams. Once the (SIP) PTW session is established between the two end users, the invitee is not requested if he wishes to receive a video live, the video is started by the inviter until the floor is owned by him, the invitee can anyway break the video off simply by leaving the PTW session.
- Floor can be requested during the session using:
   - Softkeys which enable to take and release the floor (for implementation on Nokia Series 60 handheld).
   - Joystick which is used to take the floor and push video until it is pressed like a walkie-talkie (for Motorola handheld).
- The floor can be requested several times and live video exchanged real-time during the same session by either users.

For the Use Case description will be used the following schema. The Actors that work in a particular context (Precondition) act to obtain the Goal by means of all the described steps (Actions). At the end of the action the system will be in a new state (Postcondition). Any kind of errors or abnormal situation will be described in the Exception.
*ACTOR*: An actor is a role that a user plays in the system. User A and User B are always considered.
*GOAL*: It is the purpose for this Use Case.
*PRECONDITION*: The condition that will be verified for the Use Case described.
*ACTION*: It is a textual description of the steps required and any alternative actions at each step.
*POSTCONDITION*: The effect of the Use Case on the other elements of the service.
*EXCEPTION*: All the cases that don't permit to complete the Use Cases steps.

### CS AUDIO CALL ESTABLISHMENT

*GOAL:* CS Call is established between A and B.

### PRECONDITIONS:

User A's and B's Terminals are UMTS/MultiRAB or EDGE/DTM enabled.

User A and B are under UMTS/MultiRAB or EDGE/DTM coverage.

User A and User B are provisioned and registered to IMS.

User A and B have already exchanged their capabilities.

### ACTIONS :

1) User A establishes a CS call with B.
2) CSI service menu automatically pops up with the available applications filtered according to common capabilities of A and B's terminals. N.B. CSI: indicates a combination of CS and IMS services, to say a combinational service made of a CS call + IMS session.

### POSTCONDITIONS:

CS audio call established. CSI services available on the menu.

### PTW SESSION ESTABLISHMENT

*GOAL:* Start a PTW session with the peer of the CS Call.

### PRECONDITIONS:

User A's and B's Terminals are UMTS/MultiRAB or EDGE/DTM enabled.

User A and B are under UMTS/MultiRAB or EDGE/DTM coverage.

User A and User B are provisioned and registered to IMS.

CS call established between A and B.

### ACTIONS :

1) User A selects the PTW service on the menu of the available CSI services.
2) User B accepts the session invitation. User B may have set up automatic acceptation.

### POSTCONDITIONS:

The session is established.

For Nokia PTW implementation, the floor is automatically granted to the user who sent the invitation.

For Motorola PTW implementation, the floor is still idle.

### EXCEPTIONS:

User B rejects the PTW invitation. User A is notified. CSI service menu pops up with the available applications. If the CS call is torn down, the application is closed. The application is closed as the service is intended to be a CSI: when the CS call is torn down automatically the application is terminated. User B(A) is no longer available because of out of coverage, switching off or low battery: User A(B) may be notified a failure message.

### INVITATION CANCEL

*GOAL*: The invitation is cancelled

### PRECONDITIONS:

User A's and B's Terminals are UMTS/MultiRAB or EDGE/DTM enabled.

User A and B are under UMTS/MultiRAB or EDGE/DTM coverage.

CS call established between A and B.

User A and User B are provisioned and registered to IMS.

User A has sent an INVITE to user B.

### ACTIONS :

1) User A calls off the invitation sending a CANCEL.
2) User B receives the CANCEL.

### POSTCONDITIONS:

The session is not established.

### DATA EXCHANGE WITH SOFTKEYS (NOKIA SERIES 60 IMPLEMENTATION)

*GOAL*: User A sends the video stream to User B

### PRECONDITIONS:

User A established PTW session with User B.

User A has been already granted the floor at the session establishment.

### ACTIONS:

1) User A's embedded video camera starts capturing the video stream that is not stored on the handset but streamed to B; User B may reject the video streams tearing down the session.
2) User A presses the PTW softkey to stop the capturing and release the floor.

### POSTCONDITIONS:

The media stream ends.

The floor is idle.

The users are notified via a specific mark on the display that they can request the floor.

### EXCEPTIONS:

If the CS call is torn down, the application is closed. The application is closed as the service is intended to be a CSI: when the CS call is torn down automatically the application is terminated. User B(A) is no longer available because of out of coverage, switching off, low battery: User A (B) may be notified a failure message.

### DATA EXCHANGE WITH JOYSTICK (MOTOROLA A1000 IMPLEMENTATION)

*GOAL:* User A sends the video stream to User B.

### PRECONDITIONS:

User A established PTW session with User B.

The floor has not yet been granted and both users can taken it independently of who starts the PTW session.

### ACTIONS :

1) User A(B) pushes the PTW joystick to take the floor. User A(B) keeps it pressed during the data exchange.
2) The floor is granted.
3) User A(B)'s embedded video camera starts capturing the video stream that is not stored on the handset but streamed to B(A);
4) User A(B) releases the PTW joystick to stop the capturing and release the floor.

### POSTCONDITIONS:

The media stream ends.

The floor is idle.

The users are notified via a specific mark on the display that they can request the floor.

### EXCEPTIONS:

If the CS call is torn down, the application is closed. The application is closed as the service is intended to be a CSI: when the CS call is torn down automatically the application is terminated. User B(A) is no longer available because out of coverage, switching off, low battery: a failure reason message notifies User A(B).

### PTW SESSION LEAVING

*GOAL*: User A(B) leaves the PTW session.

*PRECONDITIONS*: PTW Session is established.

### ACTIONS:

1) User A(B) requests the session END anytime during the PTW service.
2) The peer belonging to the session is notified that User A(B) left the session.
3) The session is torn down.

### POSTCONDITIONS: PTW session is torn down.

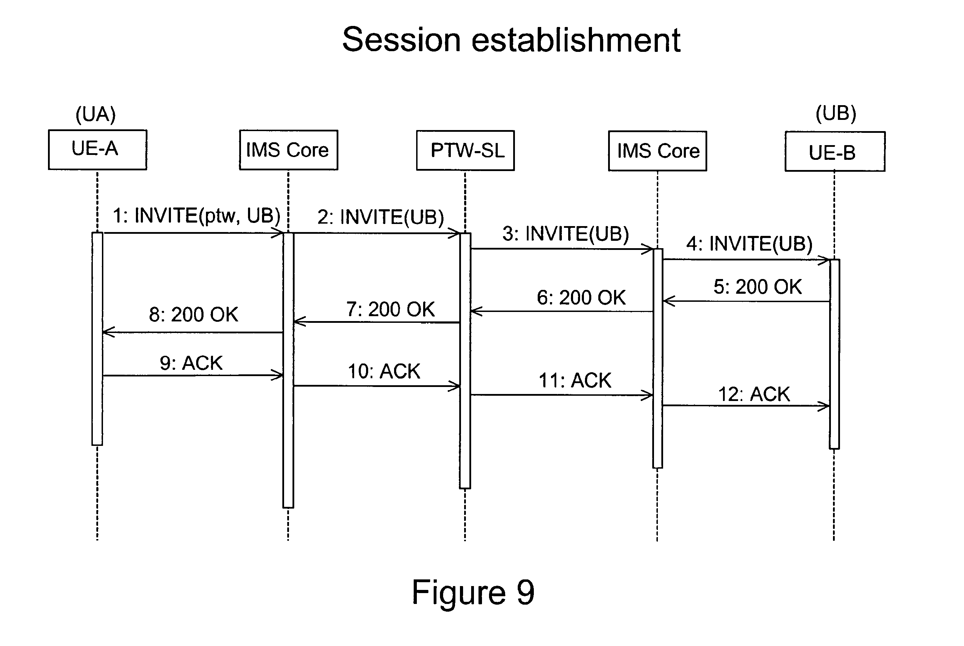

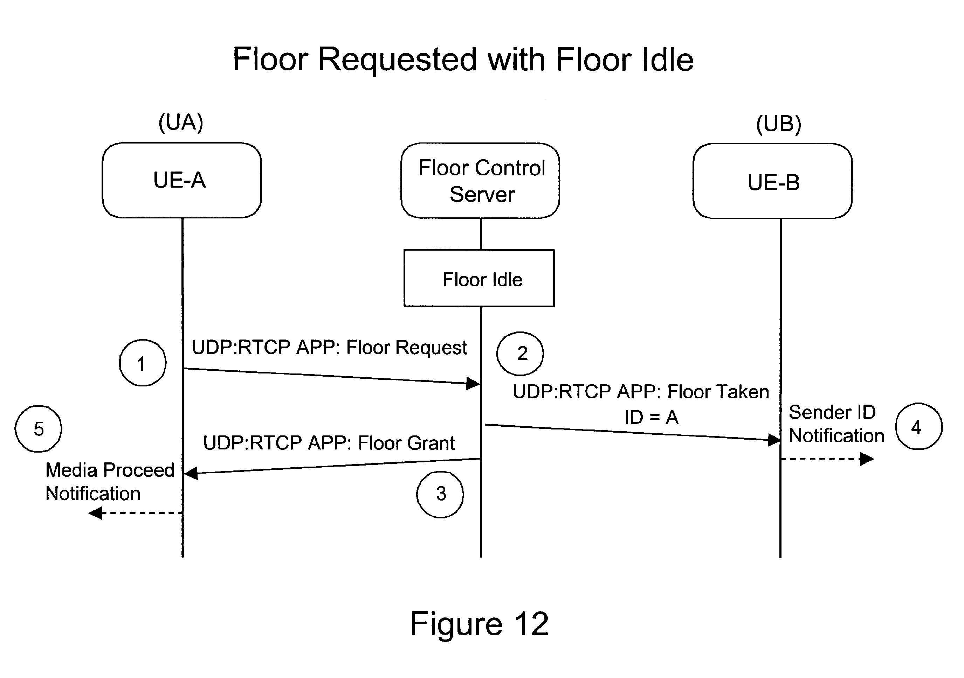

**PTW SERVICE PROCEDURES AND SIGNALLING** are described hereafter. The goal is to provide the description of the interactions from terminal to server and from server to terminal during the PTW service procedures concerning:
- Signaling plane for the description of **SIP Session** procedures (**figures 9, 10,** and **11**) trough **TCP/IP** or **UDP/IP** over **TCP or UDP** ports (sockets).
- User plane for the description of **Floor Control** procedures for **Data exchange** (**figures 12, 13, 14,** and **15**) trough **RTCP** protocols over **UDP** ports (sockets).

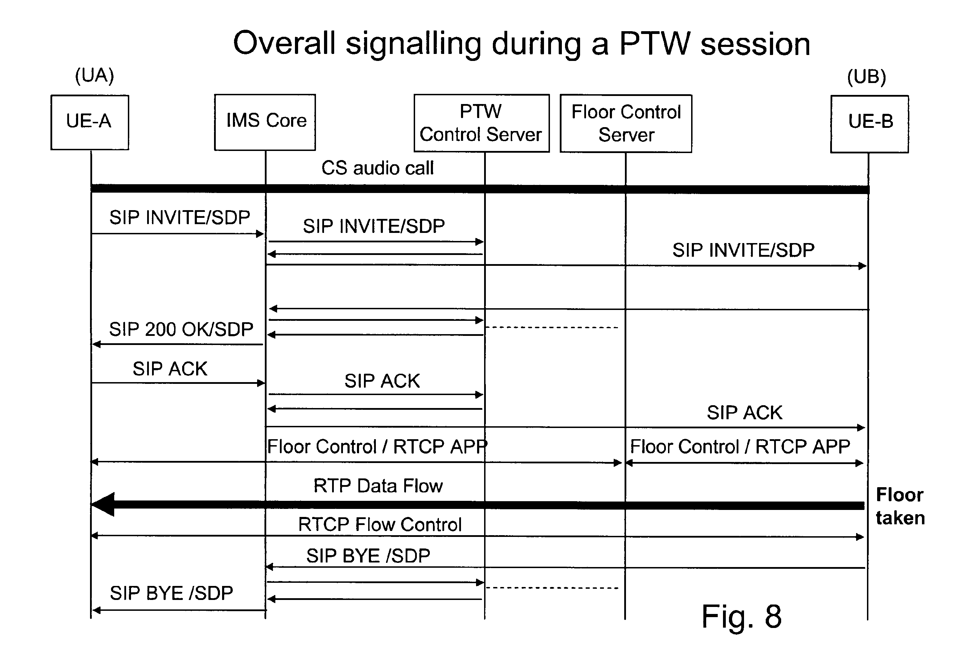

The overall messages to/from the PTW server of **fig.4** is shown in the message sequence diagram of **fig.8.** With reference to **fig.8,** the PTW session is established while a CS voice call is ongoing:
- User A, wants to establish a PTW session with user B during an ongoing CS call;
- If the user B accepts the invitation of user A, the PTW session is established;
- then user B is granted the floor he requested;
- video packets from user B to user A starts;
- when the user B releases the floor the transmission of video packets is stopped, but the PTW session is still active. Both users can alternatively send video at any time by pushing the PTW button;
- the PTW video session remains active during the voice call unless it is explicitly closed. When the voice call is torn down the PTW is automatically closed.

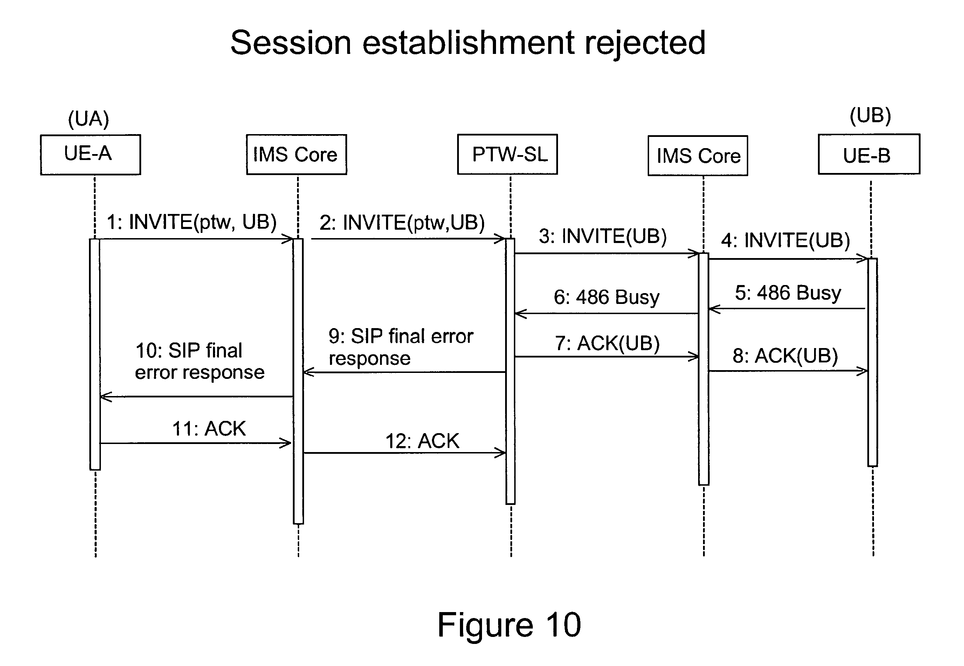

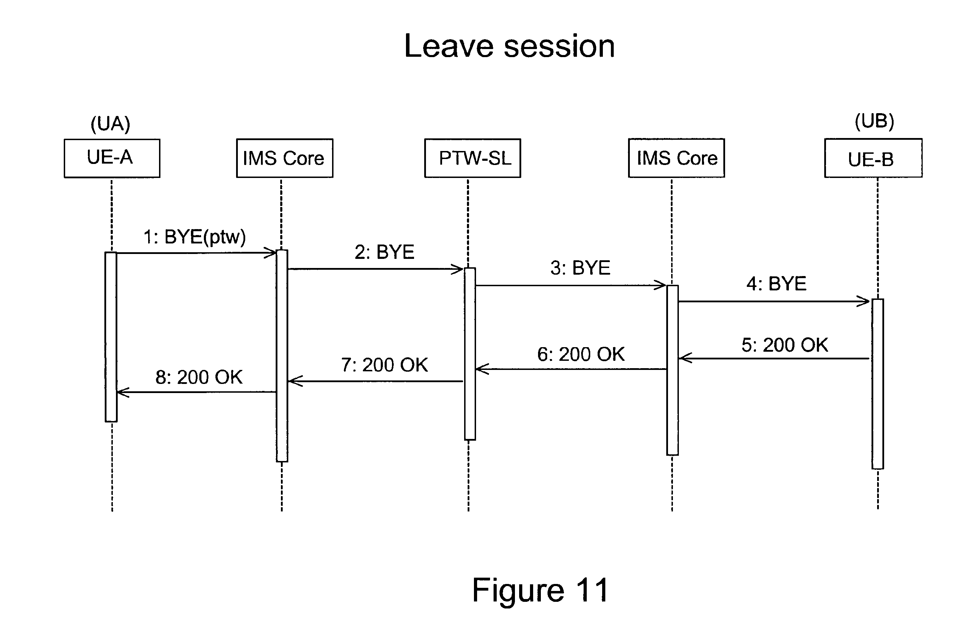

The **SIP Session procedures** are subdivided in "***Session establishment procedure***" (**figures 9** and **10**), and "***Leave session procedure*"** (**fig.11**); the Session establishment procedure in its turn is subdivided in *Successful cases* (**fig.9**) and *Unsuccessful cases* (**fig.10**).

With reference to **fig.9**, the ***Session establishment procedure*** with *Successful case* is described. SIP 1xx messages usage is in line with the specifications [RFC3261], thus they have been omitted for better understanding of the picture. As precondition, the user shall be registered successful to the network. The mimic is:
- UA invites UB sending SIP INVITE request to the server;
- PTW SL invites user UB sending a SIP INVITE request;
- UB sends SIP 200 OK response to the PTW SL;
- PTW SL sends the response to the inviter user;
- UA sends SIP ACK request to the server;
- PTW SL sends the SIP ACK request received from UA to user UB.

All SIP messages depicted include the mandatory parameters defined in [RFC3261] with the clarification and additions specific to P2W. Identification of the service session is realized by:
- a "private" parameter in INVITE Request-Uri and To (from UE) in INVITE From (to UE), or
- an additional header named "Conference-ID" contained in all requests and in all responses of a service session.

See **APPENDIX A** for detail of the SIP INVITE Request message [1.INVITE], which includes the mandatory parameters defined in [RFC3261] with the clarifications and additions specific to PTW. Request and To headers include "private" parameter. It is a string used for identification of the service session. The same for SIP [2.INVITE] used for identification of the service session. The same for SIP [4.INVITE].
SIP 200 OK(INVITE) Response [5. 200 OK]. The SIP 200 OK response includes the mandatory parameters defined in the [RFC3261].
The same for SIP [6.200 OK].
The SIP 200 OK(INVITE) Response [7. 200 OK] includes the mandatory parameters defined in the [RFC3261] with the clarifications and additions specific to PTW service reported in the last line of APPENDIX B.
The same for SIP [8.200 OK].
SIP ACK Request [11. ACK].
The SIP ACK Request includes the mandatory parameters defined in the [RFC3261]
The same for SIP [12. ACK] requests.

With reference to **fig,10,** the ***Session establishment procedure*** with *Unsuccessful case* is described. For general protocol errors see [RFC 3261]. It is described the case in which the invitation has been rejected by the UE.

As precondition, the user shall be registered successful to the network. The mimic is:
- UA invites user B sending the SIP INVITE request to the PTW SL;
- PTW SL invites user UB sending a SIP INVITE request;
- UB rejects the invitation and 486 final response is sent.
- PTW SL sends SIP ACK request to user UB;
- PTW SL receives the SIP 486 BUSY from the invited user, then sends the SIP final error response to the inviter user;
- UA sends SIP ACK request to the server and the session procedure is completed;

The reject codes are displayed in the following table:

| Reject code | Reject text | Reason |
|---|---|---|
| 480 | Not registered | The invited user is not registered |
| 486 | Busy | DnD activated |
| 486 | Busy | The invited user rejects the invitation |
| | | The invited user is involved in another session |
| | | The public identity of the inviting user is not present in the active accept list of the invited user |
| 408 | Timeout | The invited user has not answered (whether accepted or rejected) within the answer time. |

SIP INVITE Request [1. INVITE].

As specified with reference to fig.9. The same for SIP [2. INVITE] request.

The SIP final error response.

The SIP final response 3xx, 4xx, 5xx, 6xx and in particular the SIP final error responses number 9 and 10 in the previous sequence diagram, include the mandatory parameters defined in [RFC3261].

SIP ACK request [11. ACK].

As specified with reference to fig.9. The same for SIP [12. ACK], request.

With reference to **fig.11**, the ***Leave session*** procedure is described. SIP 1xx messages usage is in line with the specifications, thus they have been omitted for better understanding of the picture. As precondition, the user shall be registered successfully to the network and the session is in progress. The Release mimic is:
- UA releases the session sending SIP BYE request to the server;
- PTW SL sends SIP BYE request to UB;
- UB sends SIP 200 OK response to the PTW SL;
- PTW SL sends the response to the inviter user.

UA has left PTW session while CS voice call with UB is ongoing.

SIP BYE Request [1.BYE].

The SIP BYE request includes the mandatory parameters defined in [RFC3261] with the clarifications and additions specific to PTW.

The same for SIP [2.BYE] request.

SIP 200 OK Response [3. 200 OK].

As specified with reference to fig.4. The same for SIP [4. 200 OK], response.

Description of PTW procedures to UE.

### USER PLANE

This paragraph describes the user plane protocol. Due to the half-duplex one-to-one nature of the implemented PTW service the RTP flow is exchanged directly between the two users in session.

### Transport:

IP: The UE and Core network shall support IPV4.
UDP: UDP is used as a transport protocol for RTP and RTCP packets.

### Port Numbers

RTP/RTCP port-numbers shall be negotiated using SDP parameters. The PTW server provides the UE a port number for the user plane during the SIP session establishment phase.

### RTP

The media is transported using RTP as defined in [RFC3550]. The UE shall use a unique SSRC according to [RFC3550]. The media transport shall be compliant with the RTP profile defined in [RFC3551].

### RTCP

RTCP shall be supported according to [RFC3550].

The following RTCP packets are used in PTW service:
- RTCP APP shall be used for floor control.
- RTCP packets from a UE shall be terminated in the PTW server (MRF).

### Floor Control

Floor control will use the RTCP port negotiated at the SIP session establishment, in particular it will be the odd number immediately above the negotiated RTP port number.

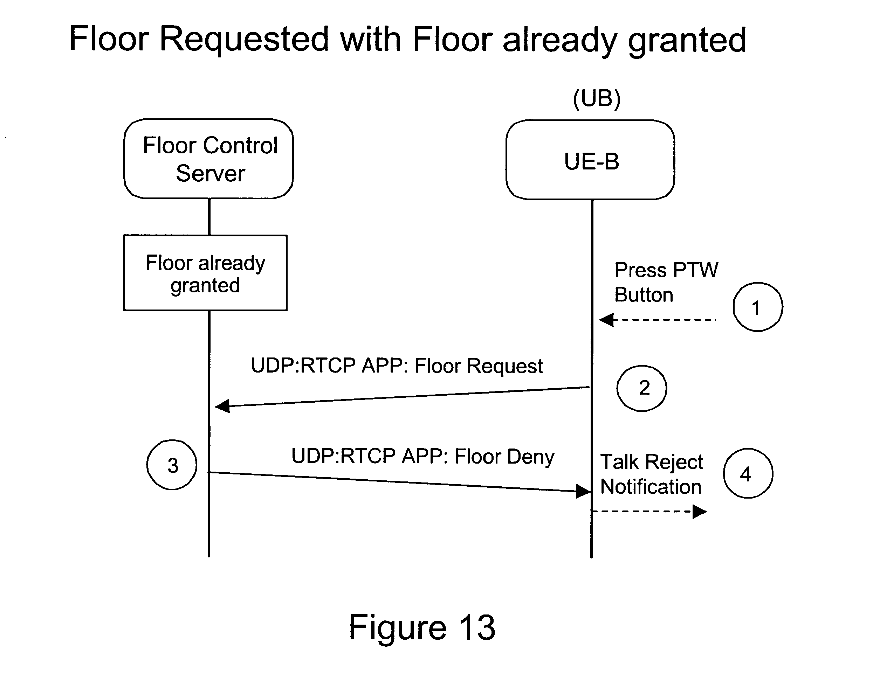

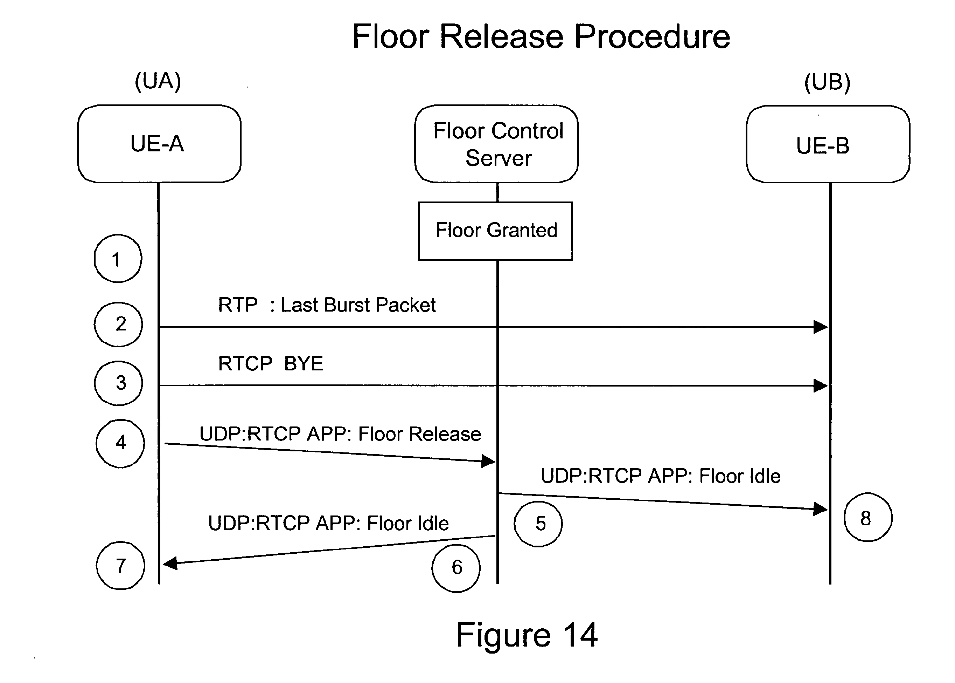

There are three main floor control procedures for Data *exchange*:
- *Floor Requested with Floor Idle* (**fig.12**);
- Floor Requested with Floor already granted (**fig.13**);
- *Floor Release* (**fig.14**)**.**

The Floor Request procedure at SIP Session Initialization is implementation dependent:
- the originating user sends the first Floor Request automatically or
- the user who pushes the button first is granted the floor.
In a scenario with a dedicated Floor Control Server, the RTP flow is exchanged directly between the two users in session.

Floor control requires the following control messages to ensure singular access to the PTW media resource. This floor control protocol is a confirmed request / grant procedure, insuring that only one user is streaming the PTW media at a given time. These messages consist of the following control methods:
- Floor Idle - The PTW server notifies the UEs that no one owns the media resource, that the floor is open / available for users to request.
- Floor Release - A UE notifies the PTW server that it is releasing the media resource. Hence moving the PTW server into the "Idle" state.
- Floor Request - A UE requests that the PTW server shall allocate the media resources to his/her device.
- Floor Grant - The PTW server notifies the UE that it has been granted the floor and therefore has been granted permission to use the media resource.
- Floor Taken - The PTW server notifies all UEs, except the UE that has been granted the floor that the floor has been granted to another UE. Also the identification of the user that has been granted permission to use the media resource is communicated in the message.
- Floor Deny - The PTW server notifies a UE that it has been denied permission to use the media resource.

Since the floor control protocol is still built on a request / grant model, application timers (as described in the subsequent paragraph) will be used to manage error conditions. Floor Request should always be responded to by a Floor Grant, Taken or Deny, and Floor Releases should always be responded to by a Floor Idle message.

With reference to **fig,12,** the initial conditions in the procedure of ***Floor Requested with Floor Idle*** are that the Floor is in the idle state, with no users currently owning the media stream. The mimic is:
- Step 1 - The UE-A sends Floor Request message to the FC Server.
- Steps 2/3 - FC Server determines that UE-A can have the floor (the resource is available), and issues Floor Grant and Floor Taken messages in steps 2 and 3. The Floor Taken message containing the sender identification of the user that has been granted the resource (in this case, User #1). The Floor Request is sent periodically by UE-A until a Floor Grant response is received by UE-A and this is managed by the floor request timer.
- Step 4 - In step 4, the sender identification of the granted user is provided to the receiving party, and is provided to the UE user.
- Step 5 - UE-A is provided a Media Proceed Notification and the user can begin sending.

### Floor Message is lost

The floor control message (the Floor Grant in the normal case) from the PTW server may be lost. Therefore, the UE shall start the Floor Request timer immediately after the SIP session is established and hence start to periodically send Floor Request messages until a floor control message from the PTW server is received. If the Floor Request timer expires and the UE has not received any floor control message from the PTW server, a new Floor Request message is sent.

With reference to **fig.13,** in the procedure of ***Floor Requested with Floor already granted*** the floor is already granted to a user on the call. A user (UE-B) attempts to request the floor that is already allocated. UE-B may also be receiving RTP stream while making the request. The mimic is:
- Step 1 - The user requests the floor.
- Step 2 - UE-B client makes a Floor Request for the floor to the Floor Control Server.
- Step 3 - Floor Control Server denies this request via a Floor Deny response (the Floor Request is periodically sent until a Floor Deny or Floor Taken or RTP media packet response is received by UE-B and this is managed by the floor request timer.
- Step 4 - UE-B provides a floor request denied notification back to the user.

With reference to **fig.14,** in the **Floor Release** procedure it is assumed that UE-A owns the floor, and is releasing the media resource. The mimic is:
- Step 1 - The user releases the floor.
- Step 2 - The UE-A stops the encoding of media and determines the sequence number of the last RTP packet in the media burst that where produced.
- Step 3 - The UE-A sends a RTCP BYE message to UE-A to leave the session.
- Step 4 - The UE-A signals to the Floor Control Server that it is releasing the floor via the Floor Release message.
- Steps 5/6 - Floor Control Server indicates to both the UE-A and UE-B that the floor is idle. UE-A uses the Floor Idle message as an acknowledgement to the Floor Release message sent previously. UE-B client provides a Floor Idle Notification to the user. The Floor Release message is sent periodically by UE-A to the Media server until UE-A receives a Floor Idle message (the floor release timer is described).
- Steps 7/8 - The UE clients notify the users that the floor is now open.

### Floor Control Packet Types

RTCP APP packet shall be used to send floor control messages. The RTCP APP packet is depicted below. The definition of the fields in the RTCP APP packet is found in [RFC3350].

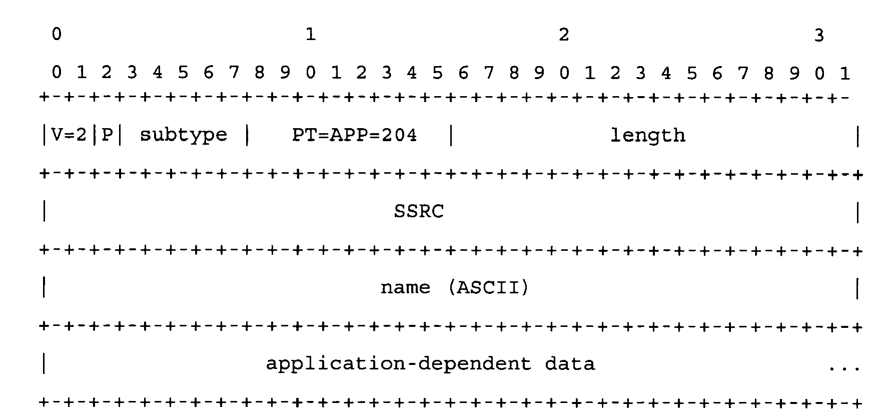

The length field in the RTCP header is the length of the packet in 32-bit words, not counting the first 32-bit word in which the length field resides.

The 4-byte ASCII string in the RTCP header shall be used to define the set of PTW floor control packets to be unique with respect to other APP packets that the application might receive. For PTW the ASCII name string shall be: PTW1. The use of application dependent data is described in the following sub clauses.

There exist 7 packet types for floor control messages:
- Floor Request
- Floor Grant
- Floor Taken
- Floor Deny
- Floor Release
- Floor Idle

The floor control packet type identifier is included in the subtype field.

### Floor Request

Floor Request is a request from a participating UE to get permission to transmit a media-burst.

The following bit pattern in the subtype field shall be used for Floor Request: 00000.

No valid application-dependent data is defined for Floor Request for this version of PTW. Therefore, the Floor Request packet shall only consist of the mandatory 12 bytes of header information and the length field shall be set to two.

The SSRC field shall carry the SSRC of the UE that requests the floor.

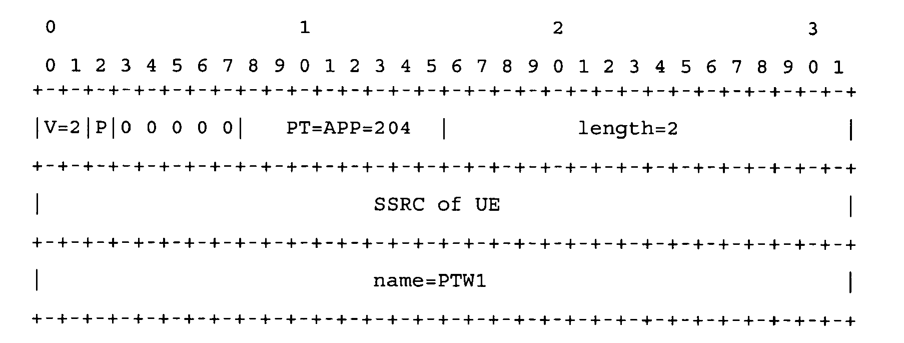

### Floor Grant

An action from the PTW server to inform the requesting UE that it has been granted the floor.

The following bit pattern in the subtype field shall be used for Floor Grant: 00001.

No valid application-dependent data is defined for Floor Grant for this version of PTW. Therefore, the Floor Grant packet shall only consist of the mandatory 12 bytes of header information and the length field shall be set to two.

The SSRC field shall carry the SSRC of the PTW server.

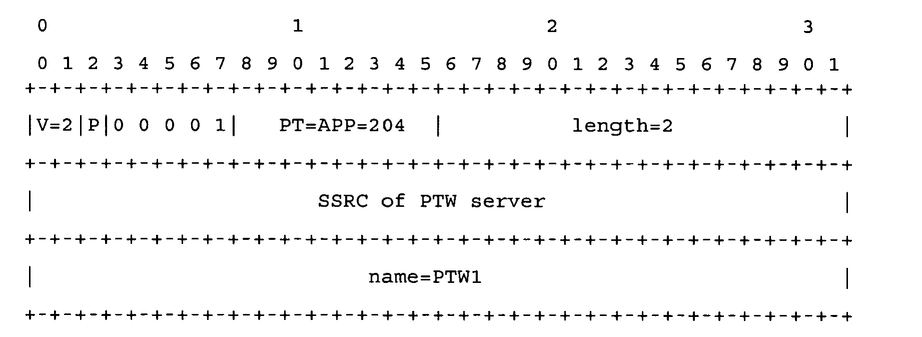

### Floor Taken

An action from the PTW server to inform non-requesting UE(s) that someone has been granted the floor.

The following bit pattern in the subtype field shall be used for Floor Taken: 00010.

In the application dependent data, the Floor Taken shall carry two SDES items, namely the CNAME item and the NAME item to identify the UE that has been granted the floor. Therefore the length of the packet will vary depending on the size of the SDES items.

The CNAME identifier shall carry the URI of the user that has been granted the floor, while the NAME identifier shall carry the display name of the user that has been granted the floor. The SDES items and the proper encoding of the URI and the display name are described in [RFC3350].

The SSRC field shall carry the SSRC of the PTW server.

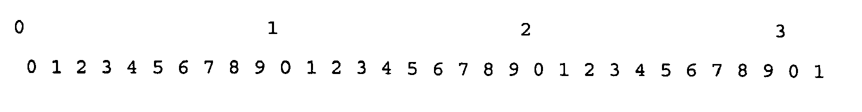

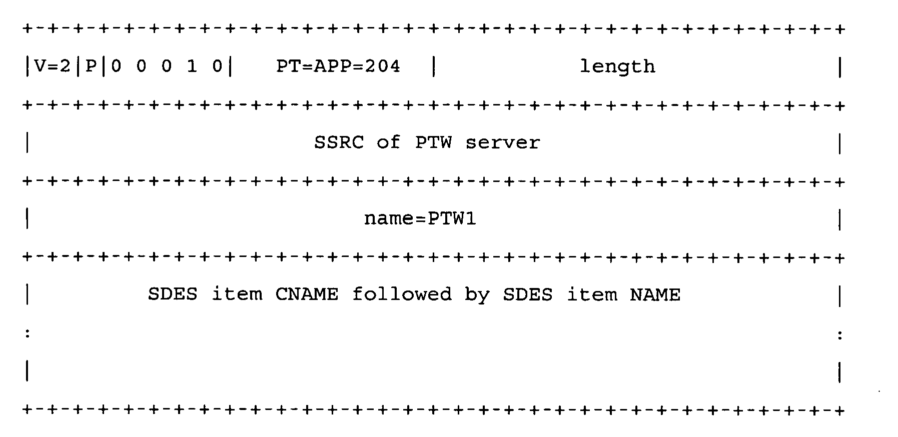

### Floor Deny

Sent as an action from the PTW server to the requesting UE to inform that the floor request was denied. The following bit pattern in the subtype field shall be used for Floor Deny: 00011.

Application-dependent data for Floor Deny includes a reason code possibly followed by a text-string (reason phrase) describing why the floor was denied. Therefore the length of the packet will vary depending on the size of the application dependent field.

The SSRC field shall carry the SSRC of the PoC server.

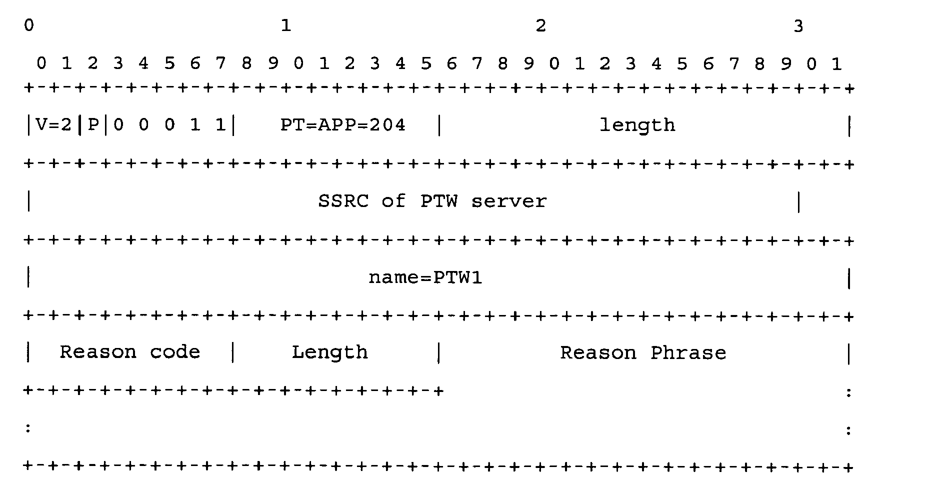

The first 8 bits in the application-dependent data field is used for the reason code.

The length field gives the length of reason phrase in bytes. If the length field is set to 0, there is no reason phrase and the 16 bits after the length field shall be set to zero.

The Reason Phrase field may contain a text string with additional information. The text string shall use the same encoding as the text strings in the SDES item CNAME (see RFC 3350).

### Reason Codes

Floor already in use - Indicates that the floor is already granted to another user.

**The reason code shall be: 1 (decimal value).**

**Internal PTW server error - Indicates that the PoC server cannot grant the floor request due to an internal error. The reason code shall be: 2 (decimal value).**

### Floor Release

Sent as an action from the granted UE to the PTW server to release the floor.

The following bit pattern in the subtype field shall be used for Floor Release: 00100.

The application-dependent data field consists of 4 octets. The first 16 bits is the sequence number of the last RTP-packet in the media burst. The last 16 bits in the application-dependent data field is padding and are set to zero. Therefore, the length field shall be set to three.

The SSRC field shall carry the SSRC of the granted UE that wants to release the floor.

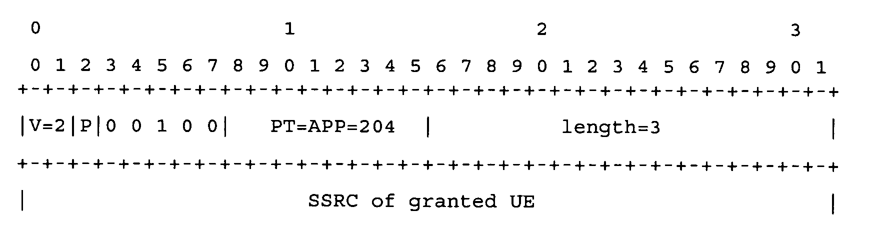

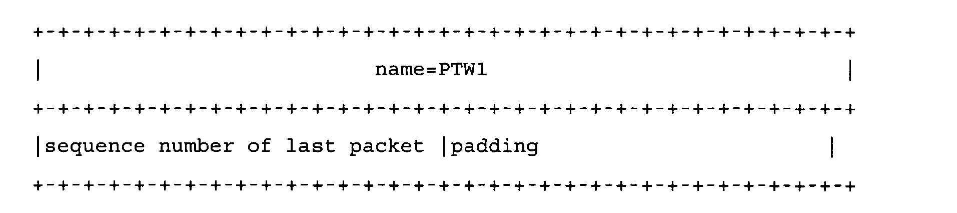

### Floor Idle

Sent as an action from the PTW server to participating UEs signaling that the floor is idle.

The following bit pattern in the subtype field shall be used for Floor Idle: 00101.

No valid application-dependent data is defined for Floor Idle for this version of PTW. Therefore, the Floor Idle packet shall only consist of the mandatory 12 bytes of header information and the length field shall be set to two. The SSRC field shall carry the SSRC of the PTW server.

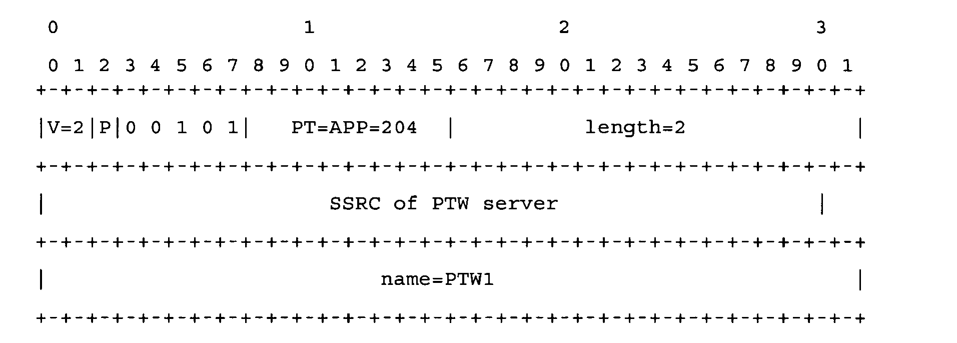

### Floor Control After Initial Establishment

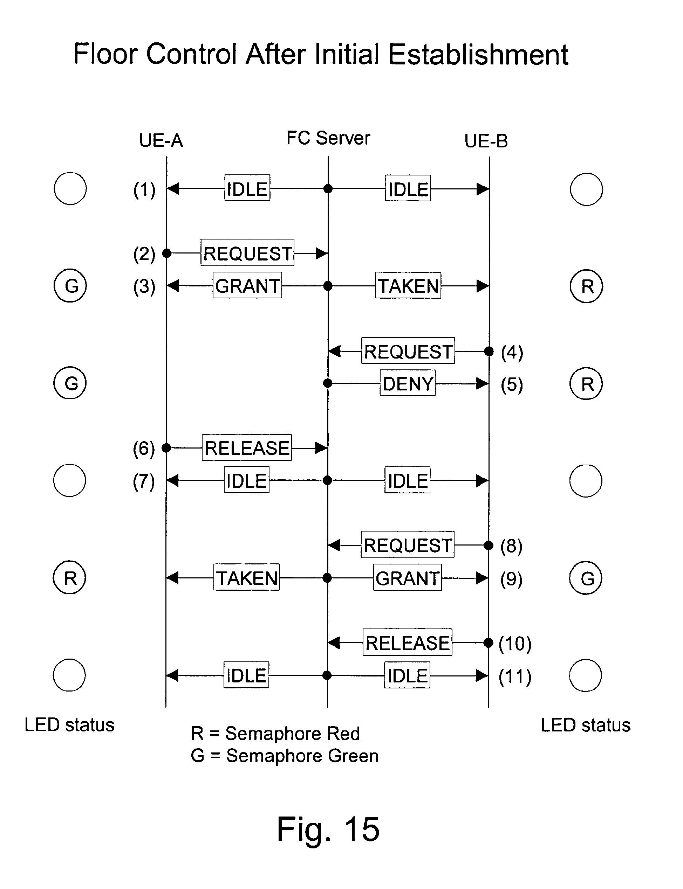

**Fig.15** summarizes the exchange of messages already reported in the previous paragraphs.

### Sender Identification Information in the UE

This sub-clause describes the procedure in the UE for identifying the sender user in the session. The UE shall receive the identity of the user that has been granted the floor in the Floor Taken message and it may display this information to the user.

### Detection of Start of a Media Burst

The start of a media burst is detected when a floor taken packet is received. If the floor control packet is lost, the M-bit in combination with the SSRC may be used to detect start of a media burst.

A media burst start is detected by a media burst end followed with a combination of the M-bit set to one and a new SSRC.

If SSRC is the same as in previous media burst, the new media burst shall be identified by the M-bit in combination with the detection of the end of previous media burst.

Upon detecting the start of the media burst, the media codec in the receiving UE(s) shall be reset before the decoding starts. This ensures correct states in the encoder and the decoder.

### Detection of end of media burst in UE

Media burst end is detected when the UE that currently are receiving RTP media and:
- The UE receives a Floor Idle packet.
- The current RTP media stream stops and the UE receives a Floor Grant or Floor Taken packet from the PTW server (before having received a Floor Idle packet).
- The UE receives RTP media with a new SSRC.

When detecting end of media burst the speech codec in the receiving UE(s) should be reset. This ensures correct states in the encoder and the decoder.

When receiving RTCP SR, the receiving UE(s) shall transmit a RTCP RR packet to the PTW server.

### Detection of end of media burst in the PTW Server

The media burst end is detected when the PTW server receives a Floor Release packet.

### Timers in the UE

### Floor Release Timer

The floor release timer resides in the UE. The floor release timer shall be started when the UE transmits Floor Release packet. When the floor release timer expires, a new Floor Release packet shall be transmitted and the timer shall be reset and started again. The floor release timer shall be stopped and reset when the UE receives a Floor Idle packet or when the UE detects the start of a media burst. The value of the floor release timer is implementation specific. But the floor release timer shall not force the UE to continuing transmit Floor Release packets 6 seconds after the first Floor Release was transmitted.

NOTE: The end of RTP media timer that resides in the PTW server has a maximum timer value of 6 seconds. When that timer expires, the PTW server will force the floor to be idle and there is no need to try to transmit Floor Release packets after that.

### Floor Request Timer

The floor request timer resides in the UE. The floor request timer shall be started when the UE transmits Floor Request packet. When the floor request timer expires, a new Floor Request packet shall be transmitted and the timer shall be reset and started again. The floor request timer shall be stopped and reset when the UE receives a Floor Grant packet, a Floor Taken packet, a Floor Deny packet or when the UE detects the start of a media burst from another UE. The value of the floor request timer is implementation specific. The floor request timer shall only permit a certain number of retransmissions of the Floor Request before the UE shall conclude that the Floor Request has timed out. When Floor Request has timed out, the user should be given the media reject notification as if the Floor Request has been denied.

NOTE: The value of the floor request timer should be low, maybe ~1 second (or even as low as 0.5 seconds). After having retransmitted the Floor Request for -6 seconds the UE should be concluded that the Floor Request has timed out and the user have to press the PTW button again to request the floor.

On the basis of the above description some changes may be introduced in the exemplary embodiment by the skilled in the art without departing from the scope of the invention. It is thus contemplated that the present invention encompasses any and all such embodiments covered by the following claims.

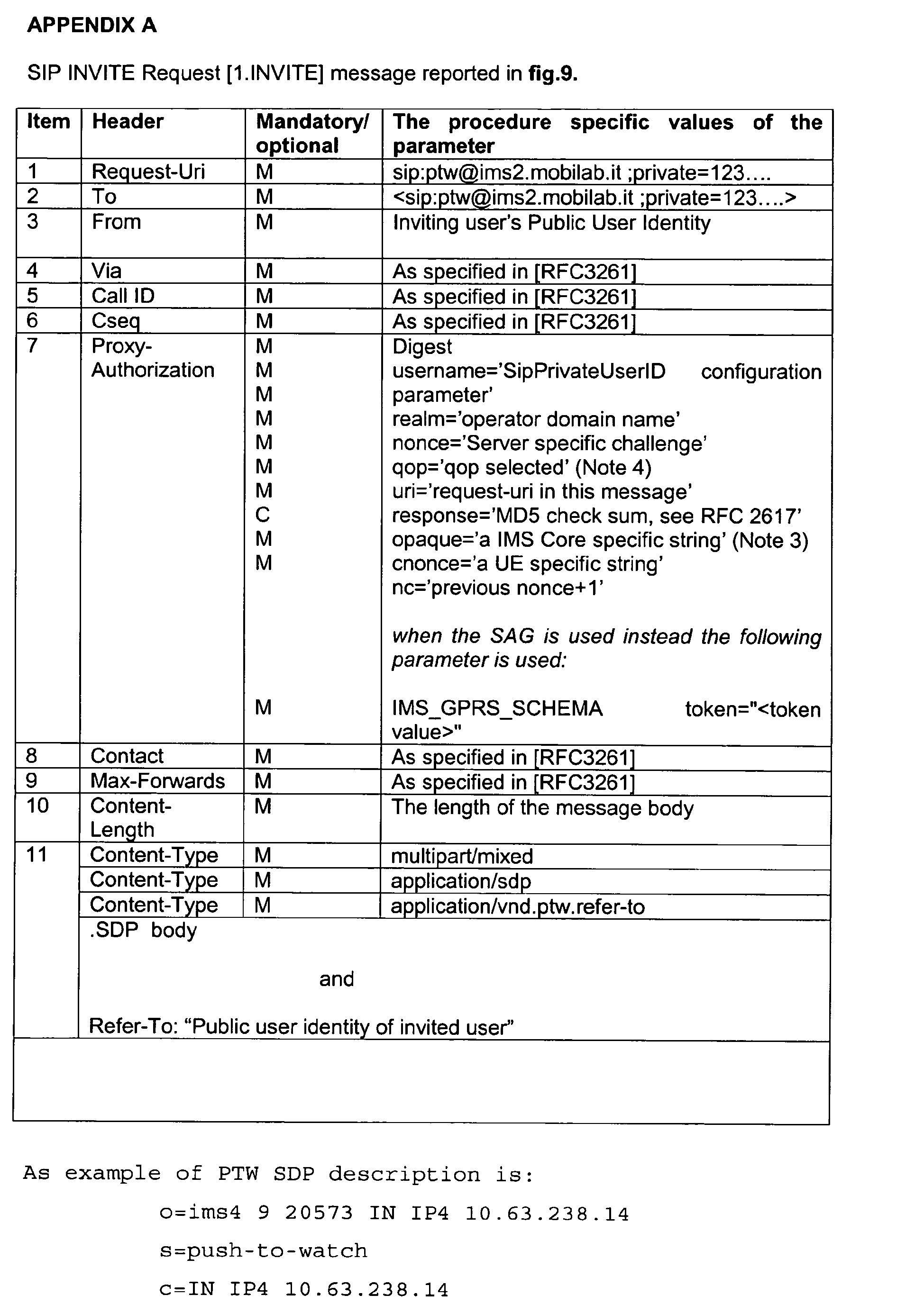

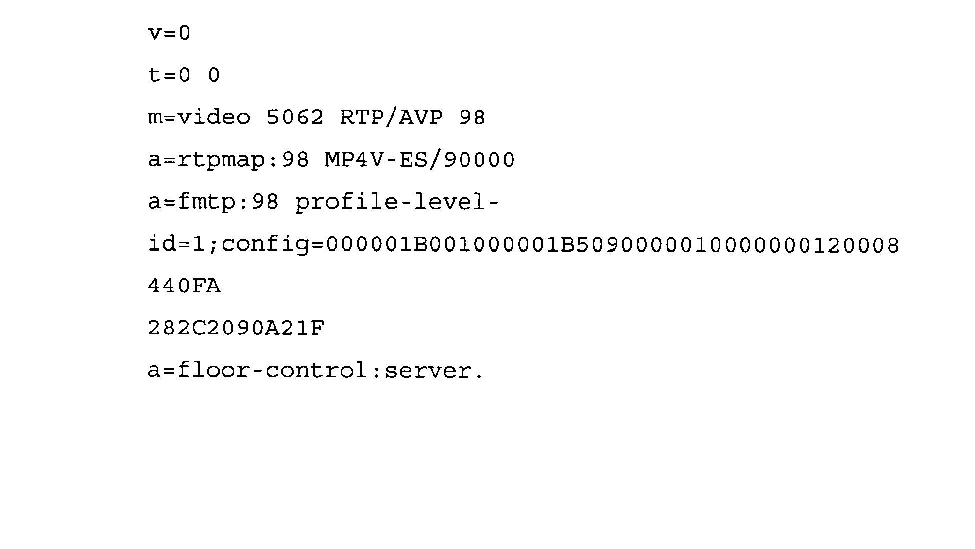

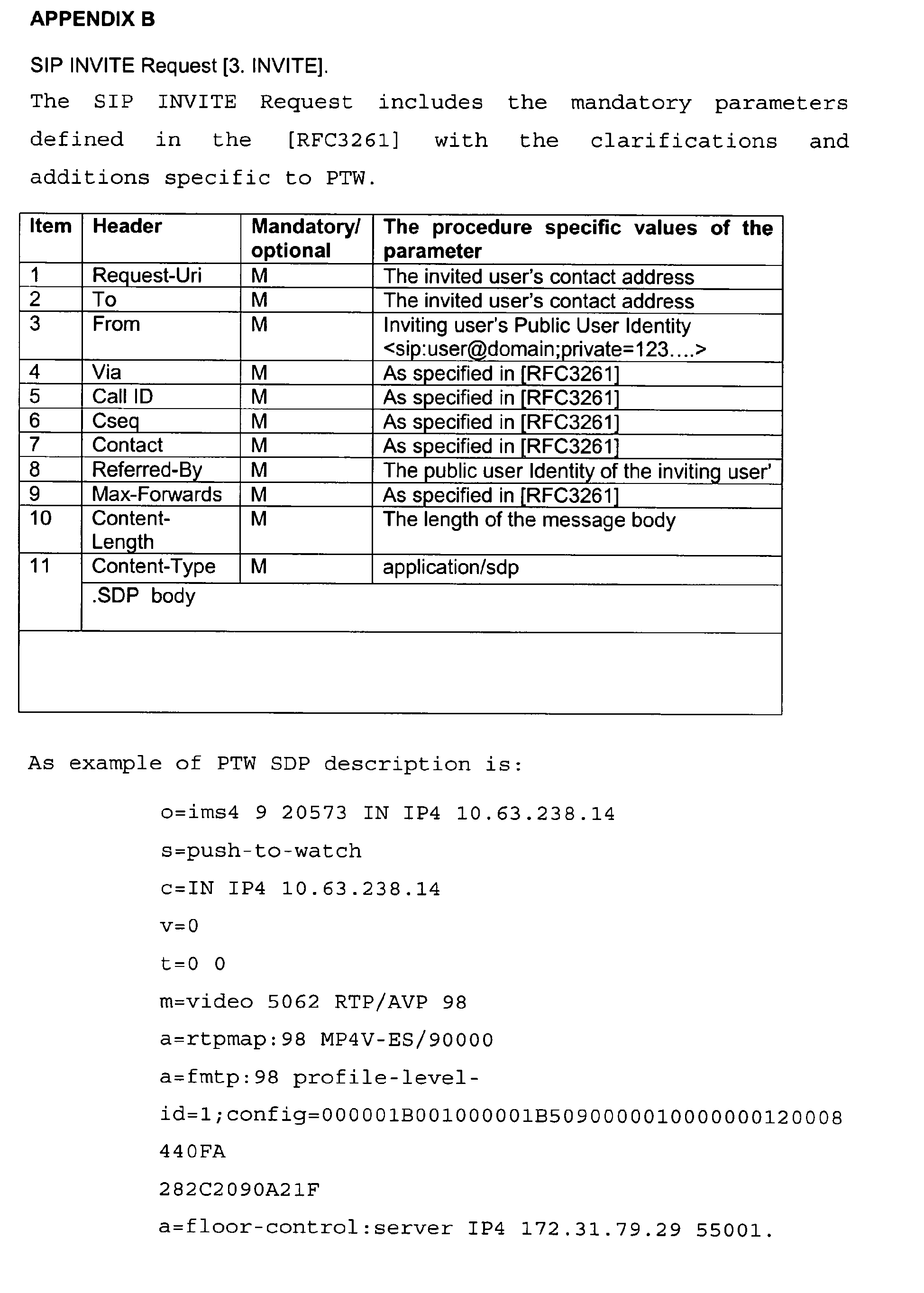

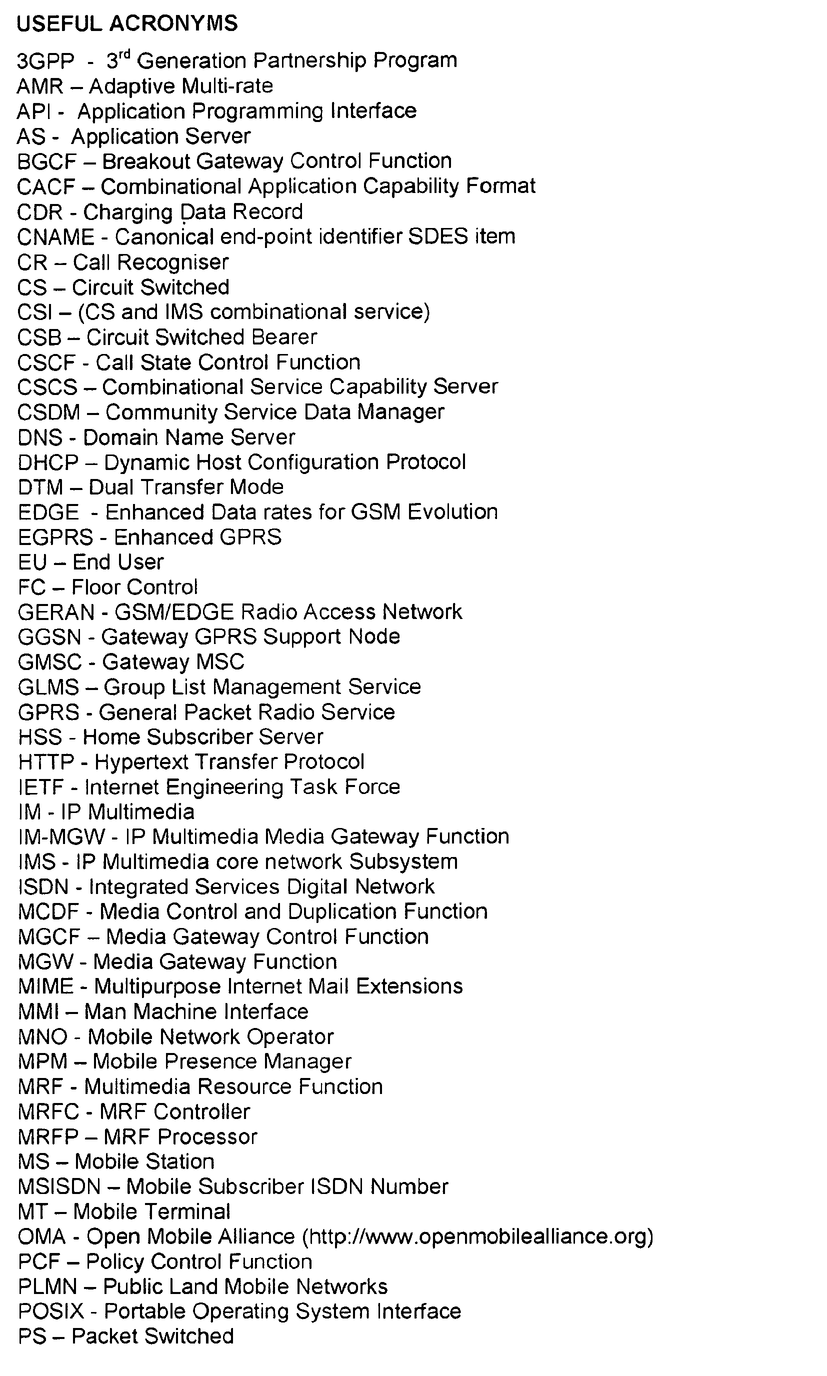

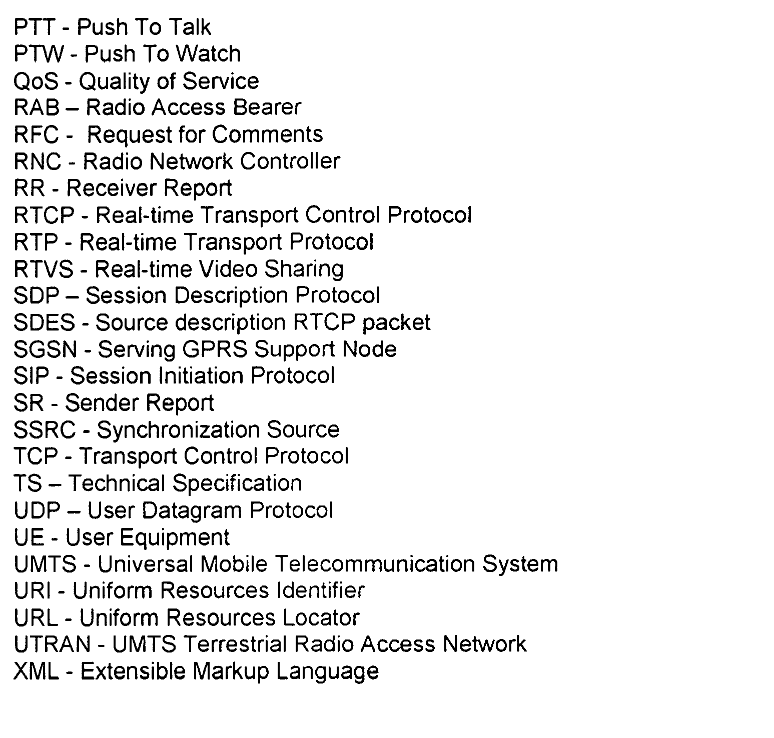

### REFERENCES

- [TS_22.101]: 3GPP TS 22.101 V 6.7.0, "Service Principles", Release 6, (March 2004).
- [TS_23.002]: 3GPP TS 23.002 V 6.1.0, "Network Architecture", Release 5, (June 2003).
- [TS_22.228]: 3GPP TS 22.228 V 6.5.0, "Service requirements for the Internet Protocol (IP) multimedia core network subsystem"; Stage 1, Release 6, (January 2004).
- [TS_23.228]: 3GPP TS 23.228 V 6.5.0, "IP Multimedia Subsystem (IMS)", Release 6, (March 2004).
- [PoC_User]: Push-to-Talk over Cellular (PoC) User Plane Transport Protocols; PoC Release 1.1.0 (August 2003).
- [PoC_Arch]: Push-to-Talk over Cellular (PoC): Architecture 1.1.0 (August 2003).
- [PoC_Sign]: Push-to-Talk over Cellular (PoC) Signalling Flow: Poc Release 1.1.3 (August 2003).
- [RFC2327]: IETF RFC 2327 "SDP: Session Description Protocol", April 1998
- [RFC2616]: IETF RFC 2616 "HTTP/1.1: Hypertext Transfer Protocol", June 1999.
- [RFC2617],: IETF RFC 2617, "HTTP Authentication: Basic and Digest Access Authentication". J. Franks, P. Hallam-Baker, J. Hostetler, S. Lawrence, P. Leach, A. Luotonen, L. Stewart. June 1999. (Status: DRAFT STANDARD).
- [RFC3261]: IETF RFC 3261 "Sip Initiator Protocol", June 2002.
- [RFC0793]: IETF RFC 0793 or STD 0007, "Transmission Control Protocol", J. Postel, Sept. 01 1981.
- [RFC0768]: IETF RFC 0768 or STD 0006, "User Datagram Protocol", J. Postel, Aug. 28 1980
- [RFC3550]: IETF RFC 3550, "RTP: A Transport Protocol for Real-Time Applications", H. Schulzrinne, S. Casner, R. Frederick, V. Jacobson, July 2003.
- [RFC3551]: IETF RFC 3551, "RTP Profile for Audio and Video Conferences with Minimal Control. H. Schulzrinne, S. Casner. July 2003. (Also STD0065) (Status: STANDARD).
- [Nokia] [OMA-Ph2-Req]: Push to Talk Over Cellular 2 Requirements; Draft Version 2.0 - 20. September 2005 OMA-RD-PoC-V2_0-20050920-D

## Claims

1. A cellular telephone network arranged for providing IP connections to the user terminals and a combinational service including two-party voice calls and video streams taken by the video camera embedded in the user terminals, including:
- means located in both the user terminals and the core network cooperating to each other for establishing two-party voice calls trough circuit switched channels;
- SIP protocol service means (Control Server), located in the core network, for establishing or tearing down sessions of said combinational service;
**characterized in that** further includes:
- a Floor Control Server located in the core network either for granting or denying a permission, called hereinafter floor, for the exclusive usage of a packet data channel by the requesters;
- push means located in the user terminals (PTW MMI) for asking the floor during a voice call;
- first UDP ports located in the user terminal and in the Floor Control Server and relevant processing means for exchanging RTCP APP floor control signalling.
- second UDP ports at the user terminals and relevant processing means (RTP/RTCP Stack) for transmitting/receiving RTP video streams and the relevant RTCP flow control signalling peer-to-peer on the granted packet data channel and in parallel to the voice call.

2. The cellular telephone network of claim 1, **characterized in that** the core network includes gateway means (GGSN) for transferring both RTP data and RTCP flow control signalling between the user terminals engaged in said two-party call, directly, and for transferring RTCP APP signalling to/from said Floor Control Server.

3. The cellular telephone network of claim 1 or 2, **characterized in that** TCP and UDP ports and relevant processing means are provided at the user terminal side and the core network side for exchanging SIP signalling;

4. The cellular telephone network of any preceding claim, **characterized in that** the user terminals include soft-keys clickable for inviting the peer user in a SIP session of said combinational service.

5. The cellular telephone network of claim 4, **characterized in that** the user terminals include soft-keys clickable for either accepting or refusing said invite.

6. The cellular telephone network claim 5, **characterized in that** the user terminals include specific marks on the display for notifying the user either that the floor in the idle state or taken state by the peer user.

7. The cellular telephone network of the claim 6, **characterized in that** said push means include a soft-key clickable for requesting the floor and transmitting the video as soon as the floor is granted, and further clickable for releasing the floor and stop the video transmission.

8. The cellular telephone network of claim 6, **characterized in that** said push means include a joystick, to be pushed and maintained pressed to get the floor and transmitting the video as soon as the floor is granted, and released for releasing the floor and stop the video transmission.

9. The cellular telephone network of any claim from 4, **characterized in that** the user terminals include soft-keys clickable for leaving the SIP session so as to reject the incoming video stream.

10. Method to provide in a cellular telephone network a combinational service including two-party voice calls and encoded video streams taken by the video camera embedded in the user terminals, including the steps of:
a) establishing a two-party voice call between users through a circuit switched channel (CS audio call);
b) sending a SIP INVITE message from one inviter (UA) to the other party (UB) engaged in the voice call for establishing a session of said combinational service;
**characterized in that** includes the further steps of:
c) introducing a specific parameter in said SIP INVITE message and the relevant Reply for indicating to both the inviter and the invited users that a request message (Floor Request) for a permission, called hereinafter floor, for the exclusive usage of a packet data channel shall be addressed to a dedicated Floor Control Server inside the network;
d) either pushing on its own terminal by a requester (UA) in the service session for sending a floor request to the Floor Control Server or being the floor request sent automatically by the inviter;
e) sending by the Floor Control Server to the requester (UA) either a floor grant (Floor Grant) or deny grant (Floor Deny) message using RTCP APP signalling;
f) transmitting by the granted requester (UA) RTP data and RTCP flow control signalling messages peer-to-peer and in parallel to the voice call.

11. The method of claim 10, **characterized in that** said specific parameter is the value of a SDP a = attribute field addressing the floor control either to said Floor Control Server or peer-to-peer.

12. The method of claim 11, **characterized in that** said specific parameter is associated to the IP address of the Floor Control Server and the number of the UDP port relevant to the RTCP APP floor control signalling.

13. The method of any claim 10 to 12, **characterized in that** the floor is in idle state and the Floor Control Server sends a Floor Grant message to the floor requester (UA) and a Floor Taken message to the peer user (UB).

14. The method of any claim 10 to 12, **characterized in that** the floor is in the already granted state and the Floor Control Server sends a Floor Deny message to the peer user (UB) who is requesting the floor.

15. The method of any claim 10 to 12, **characterized in that** the floor is in the already granted state and the sender (UA), after having transmitted the last RTP packet, forwards a BYE message to the peer user (UB) followed by a Floor Release message to the Floor Control Server, which in its turn sends a Floor Idle message to both the user (UA, UB) in the session.
